(19) Europäisches Patentamt / European Patent Office / Office européen des brevets

(11) **EP 4 644 956 A1**

(12) **EUROPEAN PATENT APPLICATION**
published in accordance with Art. 153(4) EPC

(43) Date of publication:
05.11.2025  Bulletin 2025/45

(21) Application number: 23914779.6

(22) Date of filing: 21.12.2023

(51) International Patent Classification (IPC):
$G02B\ 5/00^{(2006.01)}$  $B32B\ 3/30^{(2006.01)}$
$B32B\ 9/00^{(2006.01)}$  $B32B\ 9/04^{(2006.01)}$
$G02B\ 1/118^{(2015.01)}$  $G02B\ 1/14^{(2015.01)}$

(52) Cooperative Patent Classification (CPC):
B32B 3/30; B32B 9/00; B32B 9/04; G02B 1/118;
G02B 1/14; G02B 5/00

(86) International application number:
PCT/JP2023/045876

(87) International publication number:
WO 2024/147293 (11.07.2024 Gazette 2024/28)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 06.01.2023  JP 2023001380
24.10.2023  JP 2023182636

(71) Applicant: Canon Kabushiki Kaisha
Tokyo, 146-8501 (JP)

(72) Inventors:
• KOTANI, Yoshinori
Tokyo 146-8501 (JP)
• SAITO, Hiroshi
Tokyo 146-8501 (JP)

(74) Representative: WESER & Kollegen
Patentanwälte PartmbB
Radeckestraße 43
81245 München (DE)

(54) **LIGHT-ABSORBING/HEAT-INSULATING FILM, LIGHT-ABSORBING/HEAT-INSULATING MEMBER, ARTICLE, METHOD FOR MANUFACTURING LIGHT-ABSORBING/ HEAT-INSULATING FILM, AND METHOD FOR MANUFACTURING LIGHT-ABSORBING/ HEAT-INSULATING MEMBER**

(57)    An object is to provide a light-absorbing heat-shielding film achieving the balance between light-absorbing and heat-shielding characteristics (visible light-absorbing properties and heat-shielding properties) and abrasion resistance. To achieve this, the following light-absorbing heat-shielding film is provided. That is, the light-absorbing heat-shielding film is a light-absorbing heat-shielding film, including: a metal layer including a first uneven structure on one principal surface; a metal oxide layer that is disposed on the principal surface; and a coating layer that is disposed on the metal oxide layer and that is different in material from the metal oxide layer, wherein the first uneven structure has an arithmetic mean roughness, Ra, of 1 nm or more and 50 nm or less and a maximum height, Rz, of 100 nm or more and 800 nm or less.

FIG. 1A

**Description**

[Technical Field]

The present invention relates to a light-absorbing heat-shielding film, a light-absorbing heat-shielding member, an article, a method for manufacturing a light-absorbing heat-shielding film, and a method for manufacturing a light-absorbing heat-shielding member.

[Background Art]

Heat-shielding materials for controlling an increase in temperature have been increasingly used in interior and exterior parts for optical equipment, space equipment, and transport equipment. If heat-shielding materials are used for the lens barrels of infrared cameras or films for diaphragms, the heat-shielding materials enable reducing noise due to stray light, scarcely increase in temperature, and also have high dimensional stability, and materials having both light-absorbing properties and heat-shielding properties have therefore been desired. These materials having not only light-absorbing and heat-shielding characteristics but also abrasion resistance are required depending on the intended uses of the materials. Some patent literatures propose light-absorbing heat-shielding films that have excellent light-absorbing and heat-shielding characteristics, absorb visible rays and near-infrared rays, and scarcely radiate far-infrared rays (for example, Patent Literature 1).

[Citation List]

[Patent Literature]

PTL 1: International Publication No. WO 2022/019264

[Summary of Invention]

[Technical Problem]

Unfortunately, a member shown in the above-mentioned Patent Literature 1 also still have room of examination for achieving the balance between light-absorbing and heat-shielding characteristics and abrasion resistance.
The present invention has been completed in view of the above-mentioned examination. One object thereof is to provide a light-absorbing heat-shielding film using a surface coating protective material as a surface treatment agent to achieve the balance between light-absorbing and heat-shielding characteristics (visible light-absorbing properties and heat-shielding properties) and abrasion resistance.

[Solution to Problem]

The present invention is a light-absorbing heat-shielding film, including: a metal layer including a first uneven structure on a principal surface;

a metal oxide layer that is disposed on the principal surface; and
a coating layer that is disposed on the metal oxide layer and that is different in material from the metal oxide layer,
wherein the first uneven structure has an arithmetic mean roughness, Ra, of 1 nm or more and 50 nm or less and a maximum height, Rz, of 100 nm or more and 800 nm or less.

The present invention is a light-absorbing heat-shielding member, including the above-mentioned light-absorbing heat-shielding film,
wherein a substrate is disposed on a surface opposite to a surface having the first uneven structure.
The present invention is an article including the above-mentioned light-absorbing heat-shielding film.
The present invention is a method for manufacturing a light-absorbing heat-shielding film, including:

providing a mold having an uneven shape;
forming a metal layer having an uneven structure which the uneven shape is transferred on the mold;
separating the metal layer from the mold; and

forming a coating layer on the uneven structure of the metal layer after the step of separating.

The present invention is a method for manufacturing a light-absorbing heat-shielding member, including:

providing a mold having an uneven shape;

forming a metal layer having an uneven structure which the uneven shape is transferred on the mold;
separating the metal layer from the mold;

forming a coating layer on the uneven structure of the metal layer after the step of separating; and

bonding a substrate to a surface opposite to a surface of the metal layer to which the uneven shape is transferred.

[Advantageous Effects of Invention]

According to the present invention, a light-absorbing heat-shielding film achieving the balance between light-absorbing and heat-shielding characteristics and abrasion resistance can be provided. The use of an optical element made of a metal material including a microstructure surface-coated with a coating protective layer enables achieving both light-absorbing and heat-shielding characteristics and abrasion resistance.

[Brief Description of Drawings]

[FIG. 1A]

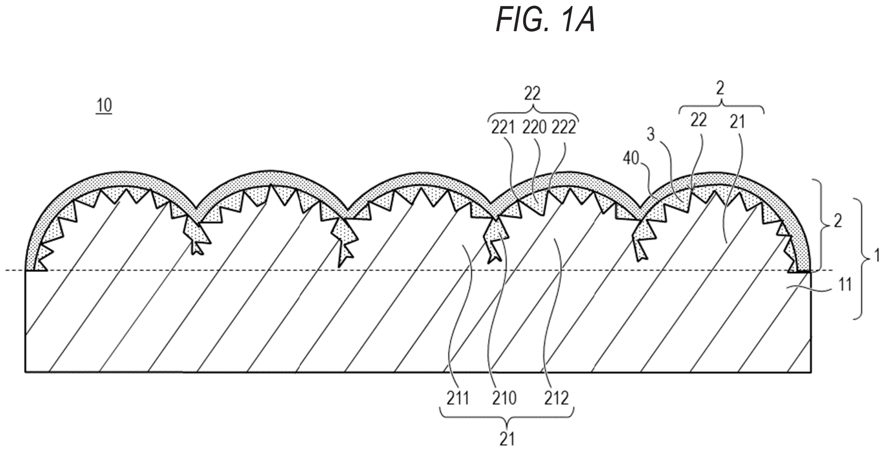

FIG. 1A is a schematic cross-sectional view illustrating an embodiment of a light-absorbing heat-shielding film of the present invention.
[FIG. 1B]

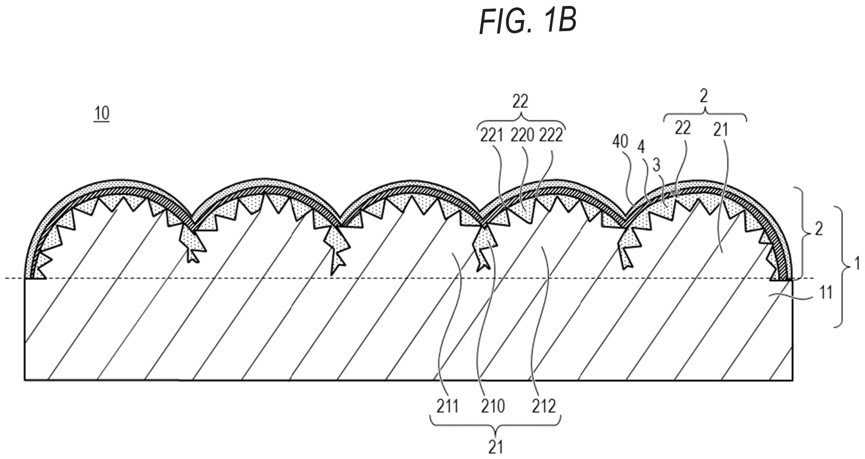

FIG. 1B is a schematic cross-sectional view illustrating an embodiment of a light-absorbing heat-shielding film of the present invention.
[FIG. 2A]

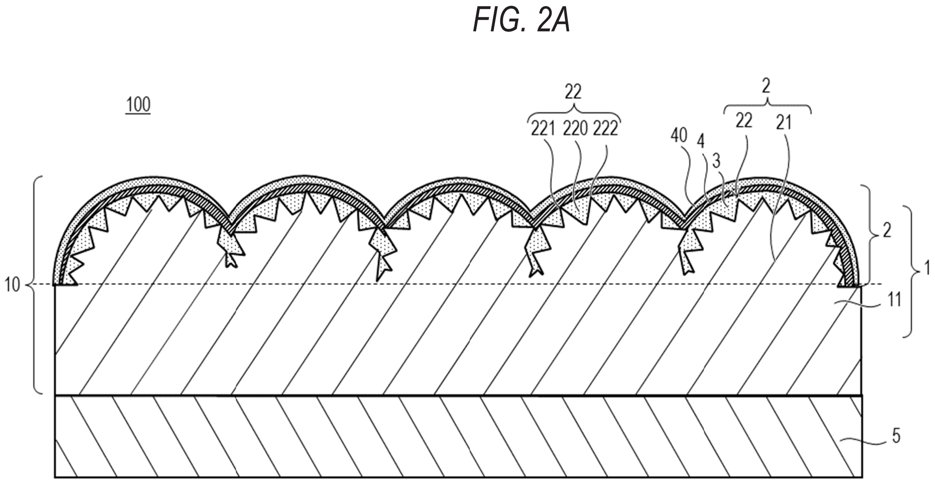

FIG. 2A is a schematic cross-sectional view illustrating an embodiment of a light-absorbing heat-shielding member of the present invention.
[FIG. 2B]

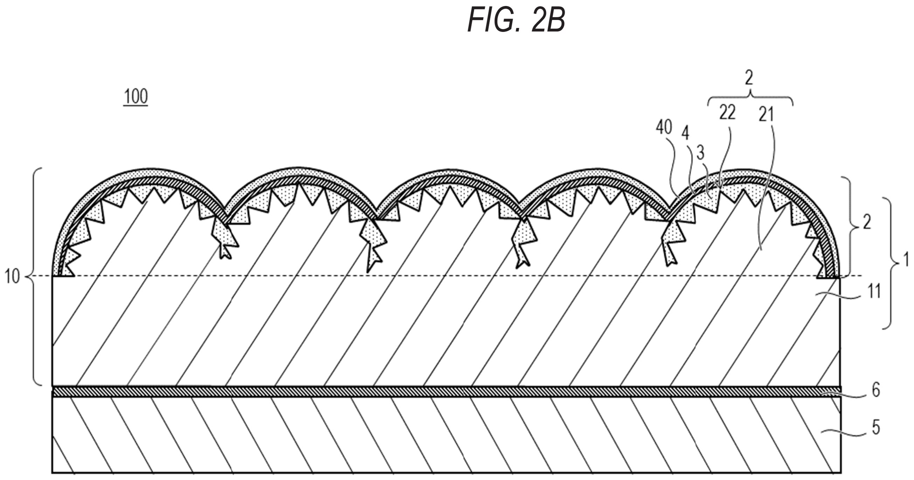

FIG. 2B is a schematic cross-sectional view illustrating an embodiment of a light-absorbing heat-shielding member of the present invention.
[FIG. 3A]

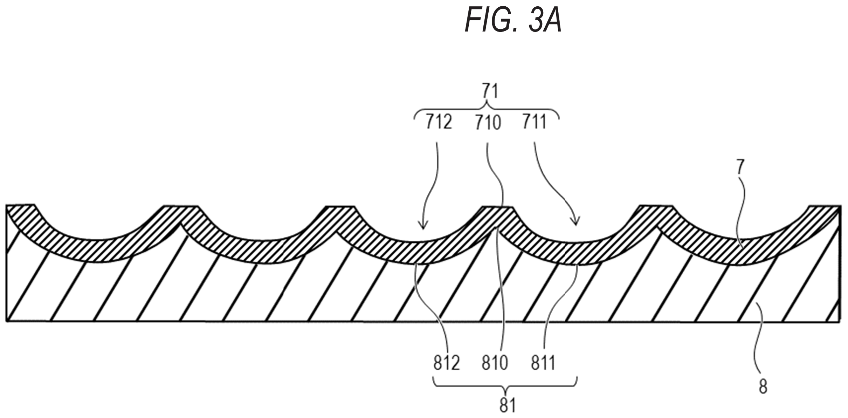

FIG. 3A is a schematic cross-sectional view illustrating an embodiment of a method for manufacturing a light-absorbing heat-shielding film or a light-absorbing heat-shielding member of the present invention.
[FIG. 3B]

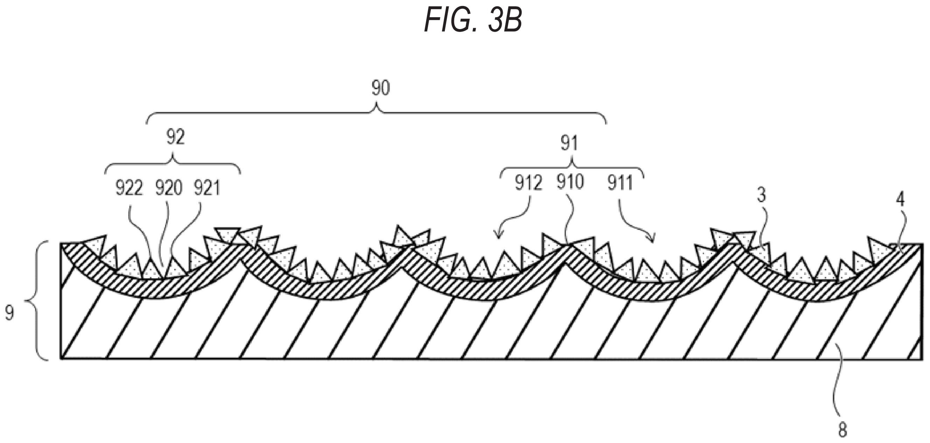

FIG. 3B is a schematic cross-sectional view illustrating an embodiment of a method for manufacturing a light-absorbing heat-shielding film or a light-absorbing heat-shielding member of the present invention.
[FIG. 3C]

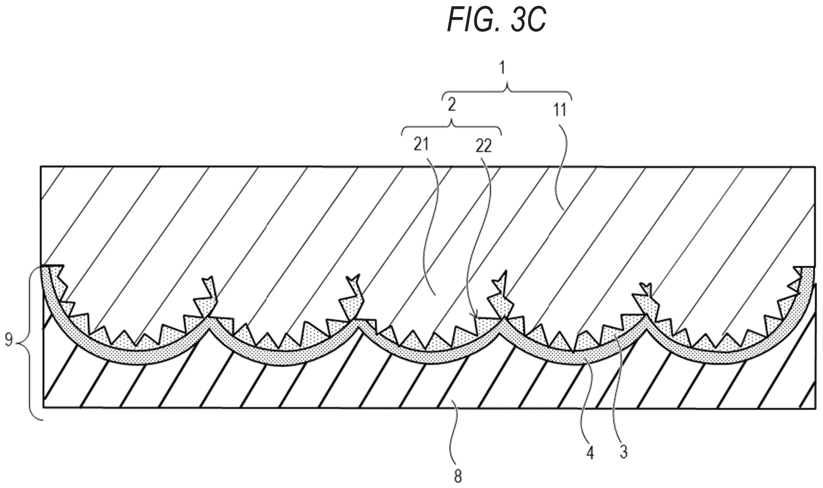

FIG. 3C is a schematic cross-sectional view illustrating an embodiment of a method for manufacturing a light-absorbing heat-shielding film or a light-absorbing heat-shielding member of the present invention.
[FIG. 3D]

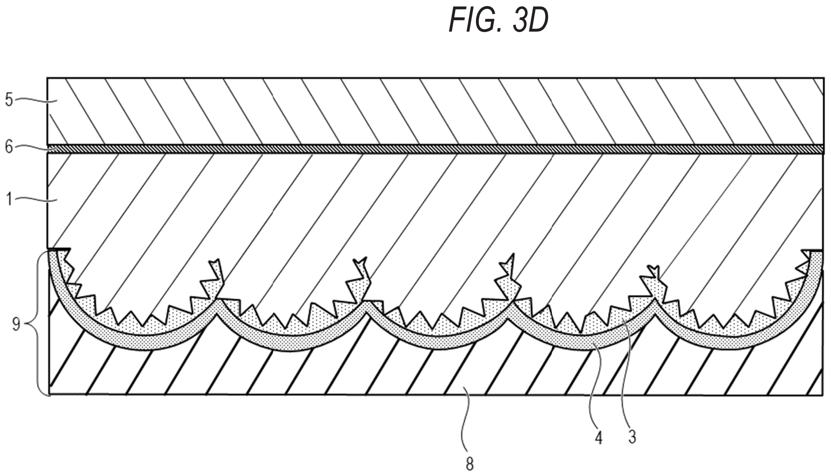

FIG. 3D is a schematic cross-sectional view illustrating an embodiment of the method for manufacturing a light-absorbing heat-shielding member of the present invention.
[FIG. 3E]

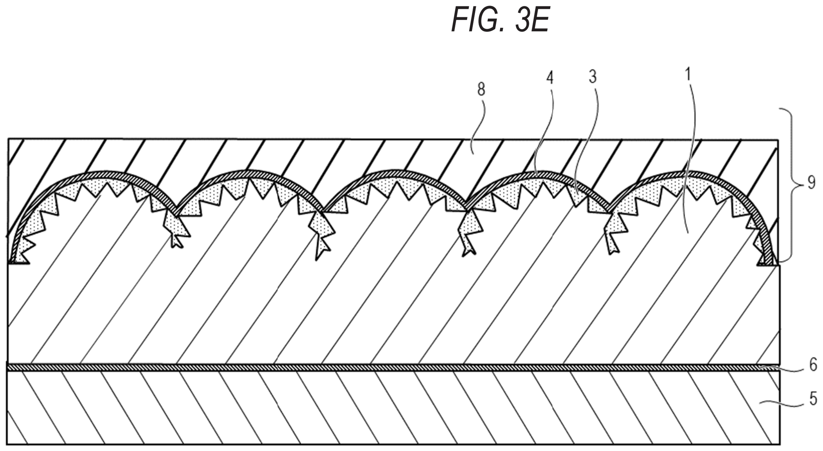

FIG. 3E is a schematic cross-sectional view illustrating an embodiment of the method for manufacturing a light-absorbing heat-shielding member of the present invention.
[FIG. 3F]

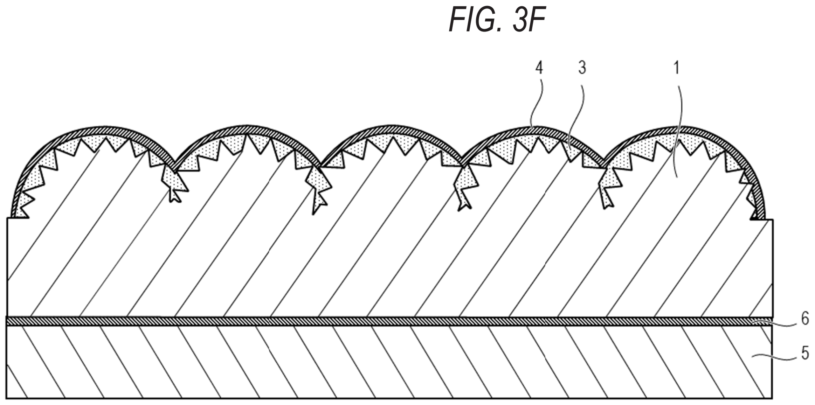

FIG. 3F is a schematic cross-sectional view illustrating an embodiment of the method for manufacturing a light-absorbing heat-shielding member of the present invention.
[FIG. 3G]

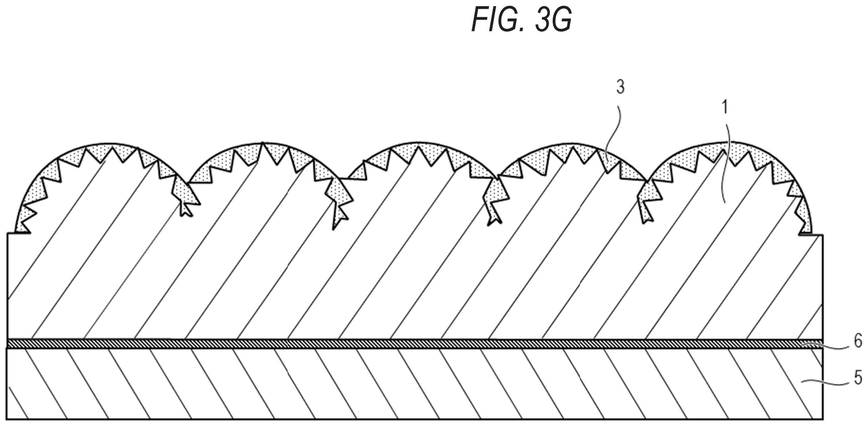

FIG. 3G is a schematic cross-sectional view illustrating an embodiment of the method for manufacturing a light-absorbing heat-shielding member of the present invention.
[FIG. 3H]

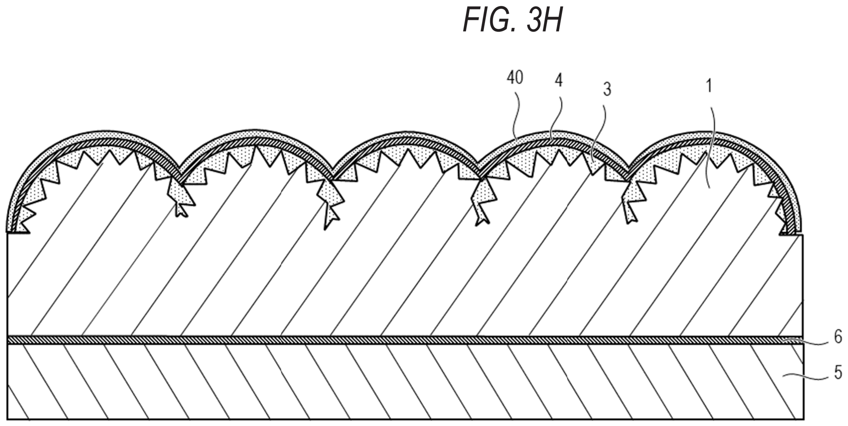

FIG. 3H is a schematic cross-sectional view illustrating an embodiment of the method for manufacturing a light-absorbing heat-shielding member of the present invention.

[FIG. 3I]

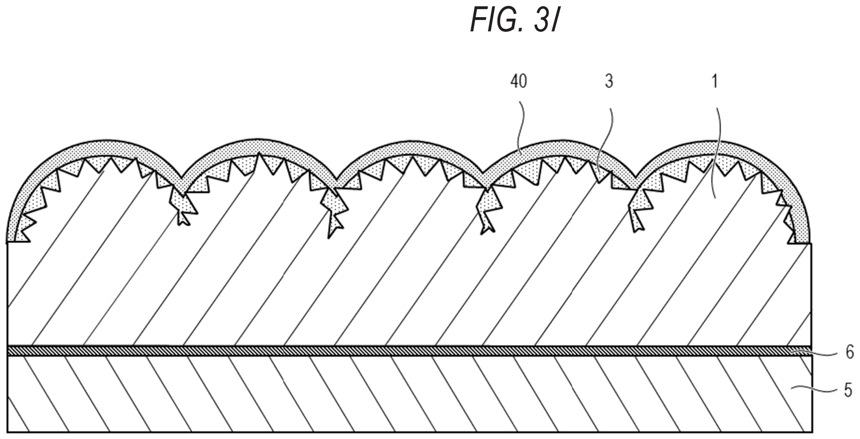

FIG. 3I is a schematic cross-sectional view illustrating an embodiment of the method for manufacturing a light-absorbing heat-shielding member of the present invention.
[FIG. 4]

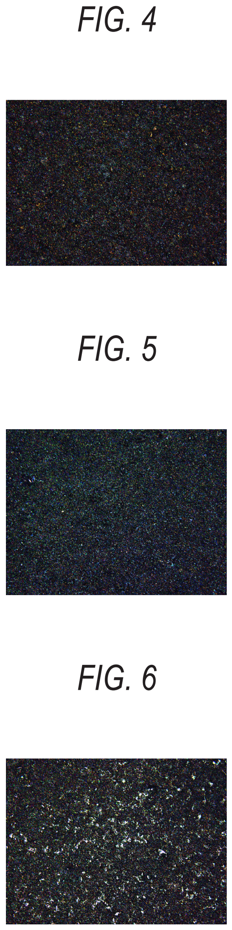

FIG. 4 is an optical microscope image of the surface of a light-absorbing heat-shielding member obtained in Example 1.
[FIG. 5]
FIG. 5 is an optical microscope image of the surface of a light-absorbing heat-shielding member obtained in Example 1.
[FIG. 6]
FIG. 6 is an optical microscope image of the surface of a light-absorbing heat-shielding member obtained in Comparative Example 1.

[Description of Embodiments]

Hereinafter, embodiments of the present invention will be described in detail.

[First embodiment]

A first embodiment relates to a light-absorbing heat-shielding film, a light-absorbing heat-shielding member, and an article.
The light-absorbing heat-shielding film according to the present embodiment includes:

a metal layer including a first uneven structure on one principal surface;
a metal oxide layer that is disposed on the principal surface; and
a coating layer that is disposed on the metal oxide layer and that is different in material from the metal oxide layer, and the first uneven structure has an arithmetic mean roughness, Ra, of 1 nm or more and 50 nm or less and a maximum height, Rz, of 100 nm or more and 800 nm or less.

The light-absorbing heat-shielding member according to the present embodiment includes the above-mentioned light-absorbing heat-shielding film, and
a substrate is disposed on the surface opposite to the surface having the first uneven structure.
The article according to the present embodiment includes the light-absorbing heat-shielding film.
Hereinafter, the substances will be described.

<Light-absorbing heat-shielding film>

Light-absorbing heat-shielding films of the present embodiments will be described using FIGS. 1A and 1B. As illustrated in FIGS. 1A and 1B, an embodiment of the light-absorbing heat-shielding film of the present invention is a light-absorbing heat-shielding film 10, including: a metal layer 1 including a first uneven structure 22 on one principal surface; metal oxide layers 3, 4 disposed on the principal surface; and a coating layer 40 disposed on the metal oxide layers 3, 4 and different in material from the metal oxide layers 3, 4. The light-absorbing heat-shielding film 10 has the structure that the metal oxide layers 3, 4 are located between the light-absorbing heat-shielding film 10 and the coating layer 40. As long as the light-absorbing heat-shielding film 10 has one of the metal oxide layer 3 and the metal oxide layer 4, the light-absorbing heat-shielding film 10 may not have the other of the metal oxide layer 3 and the metal oxide layer 4. FIG. 1A is an example without the metal oxide layer 4.

(Metal layer)

The light-absorbing heat-shielding film 10 of the present invention includes the metal layer 1 including the first uneven structure 22 on the one principal surface.
Although a highly electroconductive metal such as aluminum or nickel scarcely radiates far-infrared rays, and has heat-shielding properties, the metal does not exhibit light-absorbing properties. Meanwhile, it is known that an uneven microstructure with a subwavelength structure smaller than wavelengths of visible rays has an antireflection effect. It is known that a filling factor of structure portions is varied continuously, so that an antireflection effect thereof exhibits excellent wavelength band characteristics and incident angle characteristics. Provision of the metal surface with an uneven microstructure therefore controls reflection on the metal surface in a wide wavelength region of visible rays to reduce the reflectance in the whole visible light region, so that the metal surface appears black, and exhibits light-absorbing properties. Accordingly, it is conceivable that a metal member including an uneven microstructure on the surface can have both light-absorbing properties and heat-shielding properties.

The first uneven structure 22 and a second uneven structure 21 mentioned herein are also collectively referred to as an uneven microstructure portion 2, an uneven microstructure 2, or an uneven structure 2. The light-absorbing heat-shielding film 10 includes a base 11 under the uneven microstructure portion 2, and this base 11 is a portion of the metal layer 1. It is preferable that the metal layer 1 contain any one selected from the group consisting of nickel, chromium, and zinc. The material of the base 11 in the metal layer 1 is preferably a highly electroconductive metal. Examples thereof include silver, copper, gold, aluminum, magnesium, tungsten, cobalt, zinc, nickel, and chromium. Nickel, zinc, and chromium are preferable, and nickel is particularly preferable. The uneven microstructure portion 2 disposed on the surface of metal layer 1 preferably also contains the above-mentioned highly electroconductive metal, and more preferably contains a same metal as the base 11 of the metal layer 1.

The metal layer 1 includes the base 11 and the uneven microstructure portion 2 disposed on the base 11. The base 11 is a continuous portion of the metal layer 1 in an extending direction of the light-absorbing heat-shielding film 10 (longitudinal direction of FIGS. 1A and 1B). The uneven microstructure portion 2 is a discontinuous portion of the metal layer 1 in the extending direction of the light-absorbing heat-shielding film 10 (longitudinal on FIGS. 1A and 1B). In FIGS. 1A and 1B, the boundary between the base 11 and the uneven microstructure portion 2 is indicated with broken lines.

The uneven microstructure portion 2 has uneven microstructure disposed on one surface of the metal layer 1. The uneven microstructure portion 2 has a layered structure. That is, the uneven microstructure portion 2 has the first uneven structure 22 and the second uneven structure 21. An object having an uneven microstructure portion 2 is an uneven microconstruct, the uneven microstructure portion 2 is a part or all of the uneven microconstruct, and the uneven microstructure portion 2 can therefore be referred to as the uneven microconstruct.

The second uneven structure 21 includes multiple protrusions (for example, a protrusion 211 and a protrusion 212). The second uneven structure 21 includes multiple recesses (for example, a recess 210 between the protrusion 211 and the protrusion 212). Since the light-absorbing heat-shielding film 10 has the second uneven structure 21, the light-absorbing heat-shielding film 10 has an effect of controlling the reflection of surrounding light sources. The protrusions 211, 212 of the second uneven structure 21 are portions of the metal layer 1. The recess 210 of the second uneven structure 21 may not include the metal layer 1, and is a space in which any substance other than the metal layer 1 can exist.

The first uneven structure 22 includes multiple protrusions (for example, a protrusion 221 and a protrusion 222). The first uneven structure 22 includes multiple recesses (for example, a recess 220 between the protrusion 221 and the protrusion 222). Since the light-absorbing heat-shielding film 10 has the first uneven structure 22, the light-absorbing heat-shielding film 10 decreases in reflectance in a whole visible light region, and has a light-absorbing effect. The protrusions 221, 222 of the first uneven structure 22 are portions of metal layer 1. The recess 220 of the first uneven structure 22 may not include the metal layer 1, and is a space in which any substance other than the metal layer 1 can exist.

It is preferable that the first uneven structure 22 is formed on a top surface of the second uneven structure 21. This enhances a light-absorbing effect of the light-absorbing heat-shielding film 10. That is, the first uneven structure 22 is disposed on top surfaces of multiple protrusions (for example, the protrusion 211 and the protrusion 212) included in the second uneven structure 21. It is preferable that the second uneven structure 21 and first uneven structure 22 contain an identical metal as main ingredients of metal materials.

The metal layer 1 as an uneven construct in the light-absorbing heat-shielding film 10 includes the base 11 containing a metal material identical to the second uneven structure 21 and first uneven structure 22 as the main ingredient under the second uneven structure 21. The base 11 continuously extends under the multiple protrusions (for example, the protrusion 211 and the protrusion 212) included in the second uneven structure 21. Meanwhile, the metal layer 1 is divided into the uneven microstructure portion 2 by recesses (for example, the recess 210) of the second uneven structure 21 or the recess 220 of the first uneven structure 22. That is, the protrusions (for example, the protrusion 211 and the protrusion 212) of the second uneven structure 21 are divided by the recess 210. Protrusions (for example, the protrusion 221 and the protrusion 222) of the first uneven structure 22 are separated by the recess 220.

It is preferable that the base 11, the first uneven structure 22, and the second uneven structure 21 contain an identical metal material as the main ingredients. The base 11, the first uneven structure 22, and the second uneven structure 21 containing a common metal material (that is, a single-layered metal layer 1) can achieve more excellent light-absorbing and heat-shielding characteristics than the base 11, the first uneven structure 22, and the second uneven structure 21 containing different metal materials (that is, a multi-layered metal layer).

It is preferable that the first uneven structure 22 have an arithmetic mean roughness, Ra, of 1 nm or more and 50 nm or less. It is preferable that the second uneven structure 21 have an arithmetic mean roughness, Ra, of 0.1 $\mu$m or more and 5 $\mu$m or less. This allows the first uneven structure 22 to reduce reflectance in the whole visible light region and have a light-absorbing effect, and enables the second uneven structure 21 to reduce reflection of surrounding light sources on the light-absorbing heat-shielding film 10.

Mean roughness of the uneven microstructure portion 2 or mean roughness of the uneven microstructure portion 2 to which a transparent metal oxide described below is attached refers to arithmetic mean roughness prescribed in "Definition and Indication of Surface Roughness" of JIS B 0601. Only a portion with reference length is sampled from a roughness curve in a direction of a mean line thereof. The arithmetic mean roughness is calculated according to the following mathematical expression (1), assuming that an X-axis is defined in a direction of a mean line of a sampled portion, a Y-axis is defined in a direction of longitudinal magnification, and a roughness curve is represented by y = f(x).

[Math. 1]

$$Ra = \frac{1}{L} \int_0^L |f(x)| \, dx$$

wherein Ra is a mean roughness (nm), L is a reference length, F(X, Y) is a height at a point of measurement (X, Y), having an X-coordinate of X and a Y-coordinate of Y.

In the light-absorbing heat-shielding film 10 according to the present embodiment, a surface of the metal layer 1 furthermore has the first uneven structure 22 with a maximum height, Rz, of preferably 100 nm or more and 800 nm or less and the second uneven structure 21 with a maximum height, Rz, of preferably 1 μm or more and 10 μm or less. This allows the first uneven structure 22 to reduce reflectance in the whole visible light region and have a light-absorbing effect, and enables the second uneven structure 21 to reduce reflection of surrounding light sources on the light-absorbing heat-shielding film 10.

A maximum height of the uneven microstructure portion 2 or a maximum height of the uneven microstructure portion 2 to which the transparent metal oxide described below is attached means the maximum height prescribed in "Definition and Indication of Surface Roughness" of JIS B 0601. Only a portion with reference length is sampled from a roughness curve in a direction of a mean line thereof. A maximum height is a distance between a top line and a bottom line of a sampled portion which is measured and calculated in a direction of a longitudinal magnification of the roughness curve. This bottom line can correspond to the boundaries between the base 11 and the uneven microstructure portion 2 indicated in FIGS. 1A and 1B with broken lines.

An arithmetic mean roughness Ra and a maximum height Rz of the uneven microstructure portion 2 can be found by observing a cross section of the light-absorbing heat-shielding film 10 of the present embodiment through a scanning electron microscope.

(Metal oxide layer)

The light-absorbing heat-shielding film of the present invention includes metal oxide layers 3, 4 disposed on the one principal surface of the metal layer 1. The metal oxide layer 4 is optional.

It is preferable that a transparent metal oxide layer 3 is attached to a surface of the uneven microstructure portion 2. In other words, it is preferable that the light-absorbing heat-shielding film 10 includes the transparent metal oxide layer 3 on a surface of an uneven microconstruct as the metal layer 1. It is preferable that the metal oxide layer 3 is disposed on at least protrusions (for example, the protrusion 221 and the protrusion 222). It is more preferable that the metal oxide layer 3 is disposed throughout the surface of the uneven microconstruct. It is preferable that a metal component of the metal oxide layer 3 attached to a surface of the uneven microstructure portion 2 is different from a metal component of the metal layer 1. That is, if the material of the metal layer 1 mainly contains nickel, the metal oxide layer 3 attached to a surface of the uneven microstructure portion 2 mainly contains an oxide of non-nickel metal. Accordingly, the metal oxide layer 3 attached to a surface of the uneven microstructure portion 2 can be distinguished from metal oxide formed by natural oxidation of the metal layer 1 and containing a same metal component as a metal component of the metal layer 1.

The metal oxide layers 3, 4 mentioned herein may be referred to as metal oxides. The metal oxide layer 3 is disposed between multiple protrusions (for example, protrusion 221 and protrusion 222) included in the first uneven structure 22. That is, it is preferable that the metal oxide layer 3 is formed in a shape of a film so as to fill recesses (for example, the recess 220 between the protrusion 221 and the protrusion 222) of the first uneven structure 22 and cover the protrusions (for example, the protrusion 221 and the protrusion 222) of the first uneven structure 22. The metal oxide layer 4 for covering the metal oxide layer 3 can be further disposed on the metal oxide layer 3 covering the recesses and the protrusions of the first uneven structure 22. The metal oxide layer 4 is disposed so as to cover the multiple protrusions (for example, protrusion 211 and protrusion 212) included in the second uneven structure 21. The metal oxide layer 4 is disposed on the recesses (for example, the recess 210 between the protrusion 211 and the protrusion 212) included in the second uneven structure 21. That is, the metal oxide layer 4 is disposed between the multiple protrusions (for example, the protrusion 211 and the protrusion 212) included in the second uneven structure 21. It is preferable that the metal oxide layer 4 is thus formed in a shape of a film so as to fill recesses (for example, the recess 210 between the protrusion 211 and the protrusion 212) of the second uneven structure 21 and cover the protrusions (for example, the protrusion 211 and the protrusion 212) of the second uneven structure 21.

As illustrated in FIG. 1B, another embodiment of the light-absorbing heat-shielding film of the present invention may further include the transparent metal oxide layer 4 which covers a surface of the metal oxide layer 3 which does not contact with the uneven microstructure portion 2. It is preferable that the metal oxide layer 4 cover the uneven microstructure portion 2, and that metal oxide layer 3 is disposed between the metal oxide layer 4 and the metal layer 1.

The material of the metal oxide layer 3 may be any material. It is preferable that the metal oxide layer 3 contain aluminum oxide as a main ingredient. It is more preferable that the metal oxide layer 3 contain plate-shaped crystals which contain aluminum oxide (hereinafter referred to as plate-shaped crystal) as the main ingredient. The plate-shaped crystals which contain aluminum oxide as the main ingredient are formed of crystals which contain oxide or hydroxide of aluminum or hydrate thereof. Particularly preferable crystals are boehmite. The plate-shaped crystals which contain aluminum oxide as the main ingredient may be plate-shaped crystals consisting exclusively of aluminum oxide, or may contain, for example, zirconium, silicon, titanium, and zinc in a very small amount.

Since the light-absorbing heat-shielding film thus includes the metal oxide layer 3, the metal oxide layer 3 can protect the uneven microstructure portion 2. If the metal oxide layer 3 has a plate-shaped structure of the plate-shaped crystals containing aluminum oxide as the main ingredient, it is preferable that the plate-shaped crystals which contain aluminum oxide as the main ingredient are disposed in a direction vertical to a planar direction of the metal layer 1, and the filling factor thereof vary continuously.

A material of the metal oxide layer 4 may be any material. It is preferable that the material of the metal oxide layer 4 contain amorphous gel of aluminum oxide. While the metal oxide layer 4 enhances surface hardness of the light-absorbing heat-shielding film 10 of the present embodiment, the metal oxide layer 4 reduces the light-absorbing properties. Therefore, thickness of the metal oxide layer 4 may be suitably determined so that the metal oxide layer 4 satisfies required hardness and light-absorbing properties. Although a metal component (metal element bound to oxygen) of the metal oxide layer 4 may be different from the metal component (metal element bound to oxygen) of the metal oxide layer 3, the metal components can be typically same. For example, both the metal component of the metal oxide layer 3 and the metal component of the metal oxide layer 4 can be aluminum. Although crystallinity of the metal oxide layer 3 and crystallinity of the metal oxide layer 4 may be same, the crystallinities can be typically different. For example, while the metal oxide layer 3 is crystalline, the metal oxide layer 4 can be amorphous. Although the compositional ratio of the metal to oxygen in the metal oxide layer 3 may be the same as a compositional ratio of the metal to oxygen in the metal oxide layer 4, the compositional ratios can be typically different. For example, if both the metal oxide layer 3 and the metal oxide layer 4 are aluminum oxide, the metal oxide layer 3 may have a composition that is more similar to the stoichiometric composition ($Al_2O_3$). Impurities of the metal oxide layer 3 may be different from impurities of the metal oxide layer 4. The metal oxide layer 3 and the metal oxide layer 4 can be thus distinguished by the metal component, crystallinity, the compositional ratio, and impurities.

(Coating layer)

The light-absorbing heat-shielding film 10 of the present invention includes a coating layer 40 which is disposed on the metal oxide layers 3, 4 and different in material from the metal oxide layers 3, 4. The metal oxide layer 4 is optional. The coating layer 40 which contacts with the metal oxide layers 3, 4 and different in material from the metal oxide layers 3, 4 contains preferably Si and O, more preferably siloxane, further preferably silsesquioxane as inorganic material. It is preferable that the light-absorbing heat-shielding film 10 of the present invention further include a coating layer 40 of organic material besides a coating layer 40 of the inorganic material described above. The coating layer 40 preferably contains a fluorine resin or an acrylic resin as the organic material. As mentioned above, the materials of the metal oxide layers 3, 4 are, for example, aluminum oxide. For example, the coating layer(s) 40 different in material from the metal oxide layers 3, 4 means that the coating layer(s) 40 is (or are) different in material from the metal oxide layers 3, 4 from a viewpoint that the coating layer(s) 40 mainly contain(s) Si (silicon) as the inorganic material, and mainly contains C (carbon) as the organic material while the metal oxide layers 3, 4 mainly contain Al (aluminum). In this case, it is not meant that the coating layer 40 does not contain Al at all, and while the materials of the metal oxide layers 3 and 4 mainly contain Al, the material(s) of the coating layer 40 does not mainly contain Al. This enables the light-absorbing heat-shielding film 10 to have abrasion resistance and weather resistance.

Silsesquioxane is a compound with T3 unit structure represented by the composition formula $[R1(SiO_{1.5})_n]$ (R1 is a functional group, and represents, for example, at least one selected from the group consisting of a polymerizable group, a hydroxyl group, a chlorine atom, an alkyl group with 1 to 6 carbon atoms, and an alkoxy group with 1 to 6 carbon atoms.). Silsesquioxane is a hybrid material of silicon oxide and the organic substance.

Silsesquioxane (hereinafter occasionally abbreviated as SQ), which is a siloxane-based compound which contains Si-O bonds as the main chain skeleton, is represented by the composition formula $[R1(SiO_{1.5})_n]$. In this case, the R1 is preferably a polymerizable group, more preferably at least one polymerizable group selected from the group consisting of an acryloyl group, a methacryloyl group, an oxetanyl group, and an epoxy group. This enables imparting high abrasion resistance to the light-absorbing heat-shielding film 10.

If silsesquioxane plays a role in binding many particles constituted of a solid material, the resultant can achieve higher film strength while the resultant is highly porous. Examples of the polymer form of silsesquioxane include, but not particularly limited to, well-known linear polysiloxane, cage polysiloxane, and ladder polysiloxane. Silsesquioxane has a structure in which each silicon atom is bound to three oxygen atoms, and each oxygen atom is bound to two silicon atoms (an atomic ratio of oxygen to silicon is 1.5). Linear polysiloxane, cage polysiloxane, and ladder polysiloxane may be mixed from a viewpoint of cost. The silsesquioxane layer has a film thickness of suitably 20 nm or more and 180 nm or less, preferably 30 nm or more and 150 nm or less.

Silsesquioxane is preferably a compound that has a polymerizable group (R1 in the above-mentioned formula) in each molecule and is cured by radical polymerization or cationic polymerization. It is preferable that the R1 is at least one polymerizable group selected from the group consisting of an acryloyl group, a methacryloyl group, an oxetanyl group, and an epoxy group. Examples of silsesquioxane that is cured by radical polymerization include silsesquioxane having an acryloyl group or a methacryloyl groups as the R1. Meanwhile, in a type that is cured by cationic polymerization, examples of the R1 include an oxetanyl group and an epoxy group. Specifically, examples thereof include silsesquioxane derivatives of the SQ Series (AC-SQ, MAC-SQ, and OX-SQ), which are available from TOAGOSEI CO., LTD.

As described above, it is preferable that the light-absorbing heat-shielding film 10 of the present invention further include the coating layer 40 of an organic material besides the coating layer 40 of an inorganic material (for example, a silsesquioxane layer). Examples of the material for the coating layer 40 of the organic material include a fluorine resin and an acrylic resin. It is preferable that the coating layer 40 of the organic material is formed on the coating layer 40 of the inorganic material (for example, a layer of silsesquioxane) described above. This enables imparting weather resistance to the light-absorbing heat-shielding film 10.

It is preferable that coating layer 40 contain a fluoroolefin-based copolymer (fluoroolefin-based polymer) as the fluorine resin. The fluoroolefin-based copolymer is a copolymer of fluoroolefin and another copolymerizable monomer that can be copolymerized with the fluoroolefin. Examples of the fluoroolefin constituting the fluoroolefin-based copolymer include fluoroolefins with 2 to 3 carbon atoms such as tetrafluoroethylene, chlorotrifluoroethylene, hexafluoropropylene, vinylidene fluoride, and vinyl fluoride. It is preferable that a rate of polymerization units based on fluoroolefin in the fluoroolefin-based copolymer be 20 to 70% by mol for imparting sufficient weather resistance to a coating film. Preferable examples of the other copolymerizable monomers constituting the fluoroolefin-based copolymer includes a vinyl-based monomer, namely a compound having a carbon-carbon double bond. Examples of the vinyl-based monomer include vinyl ether, allyl ether, vinyl carboxylate ester, allyl carboxylate ester, and olefine. A well-known acrylic resin is usable.

The coating layer 40 may contain an acrylic resin. The acrylic resin contains a (meth)acrylic polymer. Content of the (meth)acrylic polymer in the acrylic resin is usually 30% by mass or more, preferably 50% by mass or more, more preferably 70% by mass or more, particularly preferably 90% by mass or more, the most preferably 95% by mass or more. A (meth)acrylic polymer has excellent optical characteristics such as high light transmittance and a refractive index that scarcely depends on the wavelength. A (meth)acrylic polymer has a constituent unit derived from a (meth)acrylate ester monomer ((meth)acrylate ester unit). Content of the (meth)acrylate ester unit in the (meth)acrylic polymer is preferably 10% by mass or more, more preferably 30% by mass or more, further preferably 50% by mass or more, particularly preferably 70% by mass or more.

The (meth)acrylic polymer may have a constituent unit other than the (meth)acrylate ester unit. Examples of such a constituent unit include constituent units derived from monomers such as styrene, vinyltoluene, $\alpha$-methylstyrene, $\alpha$-hydroxymethylstyrene, $\alpha$-hydroxyethylstyrene, acrylonitrile, methacrylonitrile, ethylene, propylene, 4-methyl-1-pentene, vinyl acetate, 2-hydroxymethyl-1-butene, methyl vinyl ketone, N-vinylpyrrolidone, and N-vinylcarbazole. The (meth)acrylic polymer may have two or more of these constituent units.

The organic material for the coating layer 40 is not limited to a fluorine resin or an acrylic resin, and may be any material having transparency and weather resistance.

(Others)

An aluminum element, a silicon element, and the others in the uneven microstructure portion 2, the metal oxide layer 3, and the metal oxide layer 4 can be detected, for example, by surface measurement through a scanning electron microscope (SEM) or a transmission electron microscope (TEM). The aluminum element, the silicon element, and the others can also be detected, for example, by energy dispersive X-ray analysis (EDX) or X-ray photoelectron spectroscopy (XPS) during cross-section observation. Similarly, the metal elements such as silver, copper, gold, aluminum, magnesium, tungsten, cobalt, zinc, nickel, and chromium in the metal layer 1 can also be detected, for example, by surface measurement through a scanning electron microscope (SEM) or a transmission electron microscope (TEM).

Similarly, the silicon element, the fluorine element, and others in the coating layer 40 can also be detected, for example, by surface measurement through a scanning electron microscope (SEM) and a transmission electron microscope (TEM). The silicon element, the fluorine element, and the others can also be detected, for example, by energy dispersive X-ray analysis (EDX) or X-ray photoelectron spectroscopy (XPS) during cross-section observation. When the uneven microstructure portion 2, the metal oxide layer 3, or the metal oxide layer 4 are disposed, the proportion of the metal oxide of the aluminum element or others decreases relatively as a point of measurement is moved from a surface (the metal oxide layer 4) to an inside (the metal layer 1) thereof vertically to a planar direction of the metal layer 1. On the contrary, proportion of the metal elements constituting the metal layer 1 and the uneven microstructure portion 2 increases from the surface (the metal oxide layer 4) to the inside (the metal layer 1), so that only the metal elements are finally detected.

<Light-absorbing heat-shielding member>

As illustrated in FIG. 2A, an embodiment of a light-absorbing heat-shielding member of the present invention is a light-absorbing heat-shielding member 100 which includes the light-absorbing heat-shielding film 10 of the present embodiment, wherein a substrate 5 is disposed on a surface opposite to the uneven microstructure portion 2 (the first uneven structure 22) of the metal layer 1 in the light-absorbing heat-shielding film 10 of the present embodiment. The light-absorbing heat-shielding member 100 includes the substrate 5 and the light-absorbing heat-shielding film 10 disposed on the substrate 5. The substrate 5 may be a substrate that can be formed into a shape for a purpose of use, for example, a molded article. Examples include substrates in the shape of flat plates, films, and sheets, but are not limited to these.

Examples of material of the substrate 5 include, but not limited to, metal, glass, ceramics, wood, paper, and resin. Examples of the resin include thermoplastic resins such as polyester, triacetylcellulose, cellulose acetate, polyethylene terephthalate, polypropylene, polystyrene, polycarbonate, and polymethyl methacrylate. Alternatively, examples of the thermoplastic resin also include ABS resin, polyphenylene oxide, polyurethane, polyethylene, and polyvinyl chloride. Furthermore, examples include thermosetting resins such as unsaturated polyester resin, phenolic resin, crosslinked polyurethane, crosslinked acrylic resin, and crosslinked saturated polyester resin.

As illustrated in FIG. 2B, in another embodiment of the present invention, the light-absorbing heat-shielding film 10 may be bonded to the substrate 5 with an adhesive layer 6. As long as the light-absorbing heat-shielding film 10 can be bonded to the substrate 5, the adhesive layer 6 included in the light-absorbing heat-shielding member 100 may be any layer. Examples include a layer containing a cured product of an adhesive resin (for example, epoxy resin) and double-sided tape.

Although FIGS. 2A and 2B show the light-absorbing heat-shielding members 100 including the light-absorbing heat-shielding film 10 shown in FIG. 1B, the light-absorbing heat-shielding member 100 may include the light-absorbing heat-shielding film 10 shown in FIG. 2A or FIG. 2B instead of the light-absorbing heat-shielding film 10 shown in FIG. 1B.

<Applications of article>

An article according to the present embodiment includes a heating element and a light-absorbing heat-shielding film 10. The light-absorbing heat-shielding film 10 of the present embodiment can be disposed on the surfaces of various members or articles. It is preferable that light-absorbing heat-shielding film 10 of the present embodiment be used for a heating element having a heating unit as a member or an article. In the article including the heating element and the light-absorbing heat-shielding film 10, the light-absorbing heat-shielding film 10 insulates heat from the heating element. Examples of the articles including such heating elements include batteries, engines, motors, and vehicles. For example, the engines are reciprocating engines, rotary engines, diesel engines, gas turbine engines, jet engines, or rocket engines. For example, the motors are DC motors, AC motors, PM motors, brush motors, stepping motors, induction motors, servomotors, ultrasonic motors, in-wheel motors, and linear motors. A transportation apparatus including at least one of an engine and a motor may include the light-absorbing heat-shielding film 10. For example, the transport apparatuses including at least one of an engine and a motor are not only various vehicles such as cars or trains but also ships; aircraft such as drone; and various robots such as AGVs. The transport apparatuses may be for use in not only passenger transport but also freight shipment, and may be driven without any driver by teleoperation or autonomous guidance. Hybrid vehicles include batteries, engines, and motors. The light-absorbing heat-shielding film 10 and the light-absorbing heat-shielding member 100 of the present embodiment are usable as members for preventing stray light and shielding heat in optical instruments or interior or exterior members for space-related instruments such as artificial satellites. The light-absorbing heat-shielding film 10 and the light-absorbing heat-shielding member 100 can also be used, for example, as exterior films or solar collectors. In addition, the light-absorbing heat-shielding film 10 of the present embodiment can also be used, for example, for clothes. The light-absorbing heat-shielding film 10 of the present embodiment may be used as a decorative film for shielding heat. For example, the light-absorbing heat-shielding film 10 of the present embodiment can also be disposed as a decorative film for shielding heat on a surface of an interior and/or an exterior of a vehicle, a mobile device, a home electrical appliance, a parasol, or a tent outfit. Various adhesives can be used for disposing the light-absorbing heat-shielding films 10 of the present embodiment on surfaces of members or articles. The light-absorbing heat-shielding films 10 of the present embodiment can therefore be disposed on the surfaces of members and articles depending on purposes of use. The members and the articles may have smooth surfaces or two- or three-dimensional curved surfaces.

[Second embodiment]

A second embodiment relates to a method for manufacturing a light-absorbing heat-shielding film and a method for manufacturing a light-absorbing heat-shielding member.

The method for manufacturing a light-absorbing heat-shielding film of the present invention includes:

providing a mold having an uneven shape;
forming a metal layer having an uneven structure which is the uneven shape is transferred on the mold;
separating the metal layer from the mold; and

forming a coating layer on the uneven structure of the metal layer after the step of separating.

A method for manufacturing a light-absorbing heat-shielding member of the present invention, include:

providing a mold having an uneven shape;
forming a metal layer having an uneven structure which the uneven shape is transferred on the mold;
separating the metal layer from the mold;
forming a coating layer on the uneven structure of the metal layer after the step of separating; and
bonding a substrate to the surface opposite to the surface of the metal layer to which the uneven shape is transferred.

Hereinafter, the method for manufacturing a light-absorbing heat-shielding film 10 of the present embodiment and the method for manufacturing a light-absorbing heat-shielding member 100 will be described with reference to FIGS. 3A to 3I.

As illustrated in FIG. 3B, the manufacturing method of the present embodiment includes a step of providing a mold 9 having an uneven micro shape 92. Since the uneven micro shape 92 is included in an uneven shape 90, the step is a step of providing the mold 9 having the uneven shape 90.

The mold 9 has an uneven shape 91. The uneven shape 90 includes an uneven shape formed by the uneven shape 91. The uneven shape 91 includes multiple recesses (for example, the recesses 911 and 912). Multiple protrusions (for example, protrusion 910) are disposed between the multiple recesses (for example, the recesses 911 and 912) of the uneven shape 91.

The uneven micro shape 92 includes multiple recesses (for example, recesses 921 and 922). Multiple protrusions (for example, a protrusion 920) are disposed between multiple recesses (for example, recesses 921 and 922) of the uneven micro shape 92. The multiple recesses (for example, the recesses 921 and 922) included in the uneven micro shape 92 are disposed on each surface of the multiple recesses (for example, the recesses 911 and 912) included in the uneven shape 91.

The mold 9 can include a base material 8 and metal oxides disposed on the base material 8. The metal oxides disposed on the base material 8 can include a metal oxide layer 3 and a metal oxide layer 4 between the metal oxide layer 3 and the base material 8. Among the metal oxides disposed on the base material 8, the metal oxide layer 3 takes the uneven micro shape 92. That is, each of the multiple protrusions (for example, the protrusion 920) of the uneven micro shape 92 are each of multiple metal oxide layers 3. Spaces between the multiple metal oxide layers 3 are multiple recesses (for example, the recesses 921 and 922) of the uneven micro shape 92. The mold 9 thus has the uneven micro shape of the metal oxide. The uneven micro shape of the metal oxide means the metal oxide layer 3 in view of the metal oxide, and means the uneven micro shape 92 in view of the uneven micro shape.

As illustrated in FIG. 3C, the manufacturing method of the present embodiment includes a step of forming a metal layer 1 to which the uneven micro shape 92 is transferred on the mold 9 having the uneven micro shape 92. The uneven micro shape 92 is transferred, so that the metal layer 1 has a first uneven structure 22 influenced by the uneven micro shape 92 of the mold 9. In this case, the metal layer 1 also has a second uneven structure 21 influenced by the uneven shape of uneven shape 91 of the mold 9 consequently. In detail, the multiple protrusions (for example, protrusions 211 and 212) of the second uneven structure 21 shown in FIGS. 1A and 1B are influenced by the multiple recesses (for example, the recesses 911 and 912) of the uneven shape 91 of the mold 9. The multiple protrusions (for example, the protrusions 221 and 222) of the first uneven structure 22 shown in FIGS. 1A and 1B are influenced by the multiple recesses (for example, the recesses 921 and 922) of the uneven micro shape 92 of the mold 9.

As illustrated in FIG. 3D, the manufacturing method of the present embodiment further includes a step of bonding a substrate 5 to a surface opposite to a surface of the metal layer 1 of the light-absorbing heat-shielding film 10 to which the uneven micro shape 92 is transferred.

As illustrated in FIGS. 3F and 3G, the manufacturing method of the present embodiment includes a step of removing at least a part of the mold 9 from the metal layer 1. In a step shown in FIG. 3F, the base material 8 of the mold 9 is removed. In a step shown in FIG. 3G, the metal oxide layer 4 of the mold 9 is removed. If the base material 8 of the mold 9 is a transparent material such as glass, even the metal layer 1 with the base material 8 unremoved can be used as a light-absorbing heat-shielding film. That is, the metal layer 1 can be used as a light-absorbing heat-shielding member 100 having a form shown in FIGS. 3D and 3E.

The steps shown in FIGS. 3A to 3I may be parts of the method for manufacturing a light-absorbing heat-shielding film 10 or parts of the method for manufacturing a light-absorbing heat-shielding member 100.

The method for manufacturing the light-absorbing heat-shielding film 10 of the present embodiment includes the first step of forming uneven micro shapes of the metal oxides on the base material 8 and the second step of forming the metal layer 1 on the uneven micro shapes of the metal oxides. The method for manufacturing the light-absorbing heat-shielding member 100 of the present embodiment further includes a step of bonding the substrate 5 to a surface opposite to a surface which contacts with the uneven micro shapes of the metal oxides on the metal layer 1 of the light-absorbing heat-shielding film 10.

A first structure (the second uneven structure 21) of a layered microstructure in the light-absorbing heat-shielding film 10 is influenced by size of a roughness structure of a base substrate for the mold 9, and a second structure (the first uneven structure 22) is influenced by size of the uneven micro shape 92 of the metal oxide.

(First step: Step of providing mold having uneven shape)

The method for manufacturing a light-absorbing heat-shielding film 10 and the method for manufacturing a light-absorbing heat-shielding member 100 of the present invention include the step of providing the mold 9 having uneven shape 90.

In the first step, the uneven shape 90 of the metal oxides to be the mold 9 is formed.

The base substrate is first provided. Although, hereinafter, the base substrate (substrate) is restated as the base material 8 for distinguishing the base substrate from the substrate 5, the base material 8 is synonymous with a base substrate or a substrate. The base material 8 for use may have an uneven shape 81 in the order of micrometers on a surface of the base material 8. Examples include ground glass which is surface-roughened with an abrasive or etchant such as acid or alkali; and a base material 8 which is processed by electron beam, but are not limited to these. A structure of an order of micrometer is formed on a film applied to the surface into the base material 8.

As illustrated in FIG. 3A, the uneven shape 81 of the base material 8 has multiple recesses (for example, recesses 811 and 812) and multiple protrusions between the multiple recesses (for example, the recesses 811 and 812) (for example, a protrusion 810 between the recesses 811 and 812).

As illustrated in FIG. 3A, a film 7 containing aluminum is stacked on the base material 8 having the uneven shape 81 of an order of micrometers. Since the film 7 which contains aluminum is formed along the uneven shape 81 of the base material 8, the film 7 has the uneven shape 71 influenced by the uneven shape 81 of the base material 8. The uneven shape 71 of the film 7 which contains aluminum has multiple recesses (for example, recesses 711 and 712) and multiple protrusions between the multiple recesses (for example, the recesses 711 and 712) (for example, a protrusion 710 between the recesses 711 and 712). A shape of the multiple recesses (for example, the recesses 711 and 712) of the film 7 containing aluminum are influenced by a shape of the multiple recesses (for example, the recesses 811 and 812) of the base material 8. The shape of the multiple protrusions (for example, the protrusion 710) of the film 7 containing aluminum are influenced by the shape of the multiple protrusions (for example, the protrusion 810) of the base material 8.

It is preferable that mold 9 include the base 8 and the metal oxide layers (the metal oxide layer 3 and the metal oxide layer 4) having the uneven shape 90 on a base material. As illustrated in FIG. 3B, the metal oxide layer 3 which takes the uneven micro shape 92 is formed on the base material 8. The film 7 which contains aluminum is changed to form the metal oxide layer 3 which takes the uneven micro shape 92. Accordingly, the metal oxide layer 3 is disposed along the multiple recesses (for example, the recesses 711 and 712) of the film 7 which contain aluminum and the multiple protrusions (for example, the protrusion 710) of the film 7 containing aluminum. Accordingly, the metal oxide layer 3 which takes the uneven micro shape 92 also constitutes the uneven shape 91 in the uneven shape 90. As illustrated in FIG. 3B, the metal oxide layer 4 which is derived from film 7 which contains aluminum can be formed between the base material 8 and the metal oxide layer 3 which takes the uneven micro shape 92.

Although materials of the uneven shape 90 of the metal oxides may be any metal oxides, aluminum oxide is preferably a main ingredient. The uneven shape 90 can be formed by a gas phase method such as chemical vapor deposition (CVD) or physical vapor deposition (PVD), and a sol-gel liquid phase method, which are well-known. The uneven micro shape of the metal oxide which contains plate-shaped crystals containing aluminum oxide as the main ingredient can be disposed by these techniques. Especially a method which involves immersing the film 7 which contains aluminum in warm water to grow plate-shaped crystals of aluminum oxide as the uneven shape 90 is preferable. This enables producing the uneven shape 90 which has Rz and Ra in the above-mentioned preferable ranges.

Examples of the film 7 which contains aluminum includes an aluminum oxide gel film formed by applying a sol-gel coating liquid which contains an aluminum compound, and a film which contains a metal aluminum which is formed by dry film formation such as vacuum deposition or sputtering. It is preferable to form the uneven shape 90 of the metal oxides from the aluminum oxide gel film in that it is easy to adjust reactivity and height of the uneven shape 90 of the metal oxide.

Examples of usable raw material of the aluminum oxide gel film include aluminum compounds such as aluminum alkoxide, halides of aluminum, and salts of aluminum. It is preferable to use aluminum alkoxide from a viewpoint of film formability.

Examples of the aluminum compounds include aluminum alkoxides such as aluminum ethoxide, aluminum isopropoxide, aluminum n-butoxide, aluminum sec-butoxide, and aluminum tert-butoxide. Examples also include oligomers of these; halides of aluminum such as aluminum chloride; aluminum salts such as aluminum nitrate, aluminum acetate, aluminum phosphate, and aluminum sulfate; aluminum acetylacetonate; and aluminum hydroxide.

The aluminum oxide gel film may contain other compounds. Examples of the other compounds include alkoxides, halides, and salts of zirconium, silicon, titanium, and zinc; and combinations thereof. The aluminum oxide gel film containing the other compound(s) can be formed into the uneven shape 90 of the metal oxides with greater height than the aluminum oxide gel film which does not contain these.

As shown below, the sol-gel coating liquid containing the aluminum compound is applied to form the aluminum oxide gel film on the base material 8. The sol-gel coating liquid is prepared by dissolving the aluminum compound in organic solvent. A molar ratio of an organic solvent to the aluminum compound is preferably around 20.

Examples of usable organic solvent include alcohol, carboxylic acid, aliphatic hydrocarbon, alicyclic hydrocarbon, aromatic hydrocarbon, ester, ketone, ether, and mixed solvent thereof. Examples of the alcohol includes methanol, ethanol, 2-propanol, butanol, 2-methoxyethanol, 2-ethoxyethanol, 1-methoxy-2-propanol, and 1-ethoxy-2-propanol. Furthermore, examples include 1-propoxy-2-propanol, 4-methyl-2-pentanol, 2-ethylbutanol, 3-methoxy-3-methylbutanol, ethylene glycol, diethylene glycol, and glycerin. Examples of the carboxylic acid include n-butyric acid, $\alpha$-methylbutyric acid, isovaleric acid, 2-ethylbutyric acid, 2,2-dimethylbutyric acid, 3,3-dimethylbutyric acid, 2,3-dimethylbutyric acid, 3-methylpentanoic acid, and 4-methylpentanoic acid. Furthermore, examples include 2-ethylpentanoic acid, 3-ethylpentanoic acid, 2,2-dimethylpentanoic acid, 3,3-dimethylpentanoic acid, 2,3-dimethylpentanoic acid, 2-ethylhexanoic acid, and 3-ethylhexanoic acid.

Examples of the aliphatic hydrocarbon or alicyclic hydrocarbon include n-hexane, n-octane, cyclohexane, cyclopentane, and cyclooctane. Examples of the aromatic hydrocarbon include toluene, xylene, and ethyl benzene. Examples of the ester include ethyl formate, ethyl acetate, n-butyl acetate, and ethylene glycol monomethyl ether acetate, ethylene glycol monoethyl ether acetate, and ethylene glycol monobutyl ether acetate. Examples of the ketone include acetone, methyl ethyl ketone, methyl isobutyl ketone, and cyclohexanone. Example of the ether include dimethoxyethane, tetrahydrofuran, dioxane, and diisopropyl ether. It is preferable to use especially alcohol from an viewpoint of the stability of the sol-gel coating liquid.

If an aluminum alkoxide is used as the aluminum compound, the aluminum alkoxide may be hydrolyzed rapidly by moisture in air or by an addition of water due to high reactivity with water, resulting in cloudiness and a precipitate in the sol-gel coating liquid. To prevent these, it is preferable to add a stabilizing agent to the sol-gel coating liquid for stabilization. Examples of a usable stabilizing agent include $\beta$-diketone compounds, $\beta$-ketoester compounds, and alkanolamines. Examples of the $\beta$-diketone compounds include acetylacetone, trifluoroacetylacetone, hexafluoroacetylacetone, benzoylacetone, 3-methyl-2,4-pentanedione, and 3-ethyl-2,4-pentanedione.

Examples of the $\beta$-ketoester compounds include methyl acetoacetate, ethyl acetoacetate, butyl acetoacetate, hexyl acetoacetate, allyl acetoacetate, benzyl acetoacetate, and isopropyl acetoacetate. Furthermore, examples include 2-methoxyethyl acetoacetate, sec-butyl acetoacetate, tert-butyl acetoacetate, and isobutyl acetoacetate. Examples of the alkanolamines include monoethanolamine, diethanolamine, and triethanolamine. It is preferable that a molar ratio of the stabilizing agent to aluminum alkoxide is around 1.

A catalyst may be used to promote the hydrolysis reaction of the aluminum alkoxide. As the catalyst, nitric acid, hydrochloric acid, sulfuric acid, phosphoric acid, acetic acid, and ammonia can be exemplified.

A water-soluble organic polymer compound can be added to the aluminum oxide gel film as necessary. The water-soluble organic polymer compound is immersed in warm water to be easily eluted from an inside of the aluminum oxide gel film, which increases the surface area for the reaction of the aluminum compound with the warm water to enable a formation of uneven shape 90 at low temperature within a short time. Changing a type and molecular weight of an organic polymer to be added enables controlling height of the uneven shape 90 to be formed. Since a polyether glycol such as polyethylene glycol or polypropylene glycol is immersed in warm water to be easily eluted from the aluminum oxide gel film, the polyether glycol is preferable as the organic polymer. It is preferable that a mass ratio of polyether glycol to aluminum compound in the aluminum oxide gel film is in the range of 0.1 to 10.

A method for forming the uneven shape 90 of the metal oxide will be described in detail with reference to FIGS. 3A and 3B.

In the step illustrated in FIG. 3A, the aluminum compound as well as other compounds, a stabilizing agent, and a water-soluble organic polymer compound as needed are first dissolved or suspended in the organic solvent to prepare sol-gel coating liquid. This sol-gel coating liquid is applied to the base material 8, followed by drying, so that an aluminum oxide gel film as the film 7 containing aluminum is formed. Alternatively, the film containing metal aluminum as the film 7 containing aluminum is formed on the base material 8 by dry film formation such as vacuum deposition or sputtering.

Examples of material usable for the base material 8 include, but not particularly limited to, various materials such as glass, plastic, and metal. It is preferable to replace an atmosphere for application with dry air or an inert gas atmosphere such as dry nitrogen on a formation of the aluminum oxide gel film from the sol-gel coating liquid which does not contain any stabilizing agent. It is preferable that the relative humidity of the dry atmosphere is 30% or less. Examples of the method for applying the solution for forming the aluminum oxide gel film that can be suitably adopted include known techniques for application such as dipping, spin coating, spraying, printing, flow coating, and combinations thereof.

Film thickness can be controlled by changing a pulling rate in dipping, a substrate rotational rate in spin coating, and concentration of the sol-gel coating liquid. Drying may be carried out at room temperature for around 30 minutes. Drying or heat-treatment can also be carried out at still higher temperature as needed. As the temperature increases, in an immersion described below, the uneven micro shape 92 of a more stable metal oxide layer 3 can be formed. The film 7 containing aluminum preferably has a film thickness of suitably 100 nm or more and 600 nm or less, preferably 100 nm or more and 300 nm or less, more preferably 100 nm or more and 200 nm or less.

In a step illustrated in FIG. 3B, the uneven shape 90 containing aluminum oxide is preferably formed by immersing the film 7 which contains aluminum in warm water. The aluminum oxide gel film is immersed in warm water, so that a surface layer of the aluminum oxide gel film is subjected to peptization action. Although some components are eluted, plate-shaped crystals containing aluminum oxide as a main ingredient deposit and grow due to different solubilities of various hydroxides in warm water to be formed on the surface layer of the aluminum oxide gel film. The metal oxide layer 4 which contains amorphous gel of aluminum oxide as the metal oxide layer 4 (refer to FIGS. 1A and 1B) described above is formed on the base material 8.

The uneven micro shape 92 of the metal oxide layer 4 and the metal oxide layer 3 described above (cf. FIGS. 1A and 1B) is formed thereby. If a film which contains metal aluminum is substituted for the aluminum oxide gel film, aluminum is reacted with warm water to be oxidized into aluminum oxide. The uneven micro shape 92 of the metal oxide layer 3 is then formed on the surface of the film contains metal aluminum in a same way as in a case of the aluminum oxide gel film. If a material of the base material 8 mainly contains aluminum or aluminum oxide, a film formation of the film 7 which contains aluminum on the base material 8 can therefore be omitted.

A temperature of the warm water is preferably 40°C or more and less than 100°C. It is preferable to adjust an immersion time to around 5 minutes to around 24 hours. Plate-shaped crystals of aluminum oxide are crystallized using a difference in solubility in warm water between components in an immersion of the aluminum oxide gel film containing a compound or compounds except aluminum oxide. Changing composition of the inorganic components therefore enables widely controlling size of the plate-shaped crystals unlike the immersion of the aluminum oxide gel film which contains aluminum oxide as a single component. An adjustment of the film thickness of the film 7 which contains aluminum enables regulating height of the uneven micro shape 92 of the metal oxide layer 4 and the metal oxide layer 3.

Average height of the uneven micro shape 92 of the metal oxide layer 3 is preferably 100 nm or more and 1000 nm or less, more preferably 100 nm or more and 500 nm or less. Consequently, this enables thus controlling fine unevenness formed by the plate-shaped crystals over the aforementioned wide range.

(Second step: Step of forming metal layer)

The method for manufacturing a light-absorbing heat-shielding film 10 and the method for manufacturing a light-absorbing heat-shielding member 100 of the present invention include a step of forming a metal layer 1 having an uneven structure 2 which is formed by transferring the uneven shape 90 on the mold 9.

In the second step, the metal layer 1 is formed on the uneven shape 90 of the metal oxides to form the metal layer 1 with the uneven microstructure portion 2, to which the uneven micro shape 92 of the mold 9 is transferred. With reference to FIG. 3C, the step of forming the metal layer 1 on the uneven micro shape 92 of the metal oxide will be described hereinafter. As the method for forming the metal layer 1, metal plating is preferable, and electroless plating is further preferable. In the electroless plating, an aqueous solution in which a palladium compound such as palladium chloride, a gold compound such as gold chloride, a silver compound such as silver chloride, or a tin compound such as tin chloride is dissolved is applied to the uneven micro shape 92 of the metal oxide for activation. The activation may be performed by immersing the uneven micro shape 92 of the metal oxide with the base material 8 in an aqueous solution which dissolves a palladium compound.

The metal layer 1 is then deposited on the uneven micro shape 92 of the metal oxide using electroless plating solution. Metal ions in electroless plating solution corresponds to the metal layer 1 of the light-absorbing heat-shielding film 10 of the present embodiment. Electroless plating solution containing nickel ions, chromium ions, or zinc ions is preferable. Nickel plating solution, containing nickel ions, is particularly preferable. The nickel plating solution may contain a phosphorus component and a boron component besides the nickel component. Examples of commercial nickel plating solution include the TOP NICORON (registered trademark) series by OKUNO Chemical Industries Co., Ltd. In the electroless plating, a temperature of the plating solution is preferably 30°C or more and 98°C or less, further preferably 50°C or more and 90°C or less. Time for electroless plating can be adjusted depending on the thickness of the metal layer 1 to be formed, and is usually 30 seconds to 1 hour.

It is preferable that at least parts of the metal oxide layers 3, 4 be attached to the metal layer 1 separated from the mold 9. The at least parts of the metal oxide layers 3, 4 are the metal oxide layer 3 or the metal oxide layers 3, 4. This enables protecting the uneven microstructure portion 2. The metal layer 1 is thus formed so as to fill gaps of the uneven micro shape 92, so that the metal layer 1 including the uneven microstructure portion 2 formed by transferring the uneven micro shape 92 is formed. In this case, a portion located above apices of protrusions (for example, a protrusion 910) of the uneven shape 91 (on a side opposite to the mold 9) becomes the base 11, and portions located below the apices of the protrusions (for example, the protrusion 910) of the uneven shape 91 (on the side adjacent to mold 9) become the uneven microstructure portion 2. That is, this forms the metal layer 1 including a base 11, the first uneven structure 22 (the second structure), and the second uneven structure 21 (the first structure). It is preferable that the metal layer 1 including the base 11, the first uneven structure 22 (the second structure), and the second uneven structure 21 (the first structure) are a plated layer.

The metal layer 1 including the base 11, the first uneven structure 22, and the second uneven structure 21 preferably contains a same metal material as a main ingredient.

It is preferable that the electroless plating be performed so that the metal layer 1 including the uneven microstructure portion 2 has a thickness of 200 nm or more and 15000 nm or less. The metal layer 1 is formed so as to cover the apices of the protrusions (for example, the protrusion 910) of the uneven shape 91, so that the portion becomes the base 11, and thickness of the base 11 can therefore be 200 nm or more and 15000 nm or less. Average height of the first uneven structure 22 in the uneven microstructure portion 2 corresponds to the average height of the uneven micro shape 92 of the metal oxide, and is 100 nm or more and 1000 nm or less. If the metal layer 1 including the uneven microstructure portion 2 has thickness of 200 nm or more, the light-absorbing heat-shielding film 10 of the present embodiment exhibits excellent light-absorbing and heat-shielding characteristics.

To increase the thickness of the metal layer 1, electroplating may be performed on a surface opposite to a surface which is provided with the uneven microstructure portion 2 of the metal layer 1 after the electroless plating described above. Well-known electroplating solution can be used for the electroplating. For example, electroplating solution containing nickel ions, iron ions, or copper ions as metal ions is usable. If the metal layer 1 is electroplated with a metal that is same as a metal of the metal layer 1, the electroplating enables increasing the thickness of the metal layer 1.

If the metal layer 1 is electroplated with a metal different from the metal of the metal layer 1, the metal layer 1 disposed by the electroplating becomes the substrate 5. For example, an electroconductive salt, a salt for adjusting counterions, a carboxylic acid-based additive for enhancing homogeneity of the plating film, and a brightener may be added to the electroplating solution as needed besides an inorganic salt as a raw material of the metal ions.

In the electroplating step, thickness of the metal layer 1 can be adjusted to a desired thickness by regulating a solution temperature of the electroplating solution, current density, and plating time. A surface opposite to a surface of the metal layer 1 which is provided with the uneven microstructure portion 2 may be activated with an aqueous solution containing acid as needed before the electroplating step. To enhance quality of the film to be formed by the electroplating step, the electroplating step may furthermore include a step of removing foreign matter in the electroplating solution besides stirring an electroplating solution during the electroplating.

(Third step: Step of bonding substrate)

The method for manufacturing the light-absorbing heat-shielding member 100 of the present invention includes a step of bonding the substrate 5 to a surface opposite to a surface to which the uneven shape 90 of the metal layer 1 is transferred. It is preferable that the step of bonding the substrate 5 is performed after the step of forming the metal layer 1 and before a step of separating the metal layer 1 from the mold 9.

As illustrated in FIG. 3D, in the manufacturing of the light-absorbing heat-shielding member 100 of the present embodiment, the substrate 5 is bonded to a surface opposite to a surface which is provided with the uneven microstructure portion 2 of the metal layer 1 obtained above. The shape and the material of the substrate 5 described above can be used. If a material of the substrate 5 is metal, the metal serving as the substrate 5 may be further stacked on a surface opposite to a surface provided with the uneven microstructure portion 2 of the metal layer 1. For example, the metal may be stacked by the above-mentioned electroplating or physical vapor deposition such as sputtering. If the material of the substrate 5 is a resin, the resin serving as the substrate 5 may be deposited on a surface opposite to the uneven micro shape 92 of the metal oxide included in the metal layer 1, followed by curing the resin to dispose the substrate 5. The substrate 5 may be bonded to the metal layer 1 with the adhesive layer 6. An adhesive for the adhesive layer 6 may be any adhesive, and may be any material with which the substrate 5 is strongly bonded to the metal layer 1.

(Fourth step: Step of separating metal layer from mold)

The method for manufacturing the light-absorbing heat-shielding film 10 and the method for manufacturing the light-absorbing heat-shielding member 100 of the present invention include a step of separating the metal layer 1 from the mold 9. It is preferable to remove at least parts of the metal oxide layers 3, 4 which are attached to the metal layer 1 from the metal layer 1 before a step of forming the coating layer 40 (the fifth step).

As illustrated in FIGS. 3E to 3G, the step of separating the metal layer 1 from the mold 9 will be described in detail with reference to the light-absorbing heat-shielding member 100 which includes the substrate 5 and the adhesive layer 6 as an example. The same also holds true for a light-absorbing heat-shielding member 100 including only the substrate 5 without the adhesive layer 6 and a light-absorbing heat-shielding film including neither the substrate 5 nor the adhesive layer 6. FIG. 3E is the light-absorbing heat-shielding member 100 shown in FIG. 3D turned upside down.

As illustrated in FIG. 3F, the base material 8 is first removed to obtain the light-absorbing heat-shielding member 100 of the present embodiment. The light-absorbing heat-shielding member 100 from which the base material 8 is removed includes the film 7 containing metal aluminum or the metal oxide layer 4 on the surface. Since visible light is reflected by metal aluminum, if the film contains metal aluminum, as illustrated in FIG. 3G, the film containing the metal aluminum needs to be further removed by etching.

In a case of the metal oxide layer 4, the metal oxide layer 4 of the light-absorbing heat-shielding member 100 contains an amorphous gel of aluminum oxide. The layer containing the amorphous gel of aluminum oxide may be removed by etching to satisfy required surface hardness and light-absorbing properties. The etching is preferably wet etching which involves dissolving the metal oxide layer 4 or the film containing metal aluminum with acid or alkali solution.

Examples of the acid include hydrochloric acid, nitric acid, and sulfuric acid. Examples of the alkali include sodium hydroxide and potassium hydroxide. Etching with an alkali solution is more preferable from a viewpoint of working efficiency. The etching is preferably performed at an etching concentration of several to several dozen percent for an etching time of several hours to several days. The metal layer 1 in which the metal oxide is attached to the uneven microstructure portion 2 also has very excellent light-absorbing properties and can also improve strength of the uneven microstructure portion 2, so that such a metal layer 1 is also high in durability and environment resistance.

A remaining metal oxide such as aluminum oxide (metal oxide attached to the uneven microstructure portion 2) after the etching can be detected by EDX or XPS measurement during surface or cross-section observation by SEM or TEM.

As described above, degree of the etching may be adjusted depending on a balance between the light-absorbing properties and surface hardness of the light-absorbing heat-shielding member 100 or the light-absorbing heat-shielding film 10. The etching step as this step may be performed before the step of bonding the substrate 5 as the third step, followed by the bonding of the substrate 5.

(Fifth step: Step of forming coating layer)

The method for manufacturing a light-absorbing heat-shielding film 10 and the method for manufacturing a light-absorbing heat-shielding member 100 of the present invention include a step of forming a coating layer 40 on the uneven structure 2 of the metal layer 1 after the step of separating the metal layer 1 from the mold 9. It is preferable that the coating layer 40 covers at least a part of the metal oxide layers 3, 4 attached to the metal layer 1. This enables imparting abrasion resistance to the light-absorbing heat-shielding film 10.

As illustrated in FIGS. 3H and 3I, the step of forming the coating layer 40 forms the coating layer 40 for improving mechanical strength on an outermost surface of light-absorbing heat-shielding member 100. In the step of forming the coating layer 40, the coating layer 40 of siloxane, for example, especially the above-mentioned silsesquioxane, is formed. Since a description of silsesquioxane as a material is as mentioned above, the description is omitted.

Silsesquioxane is preferably a compound with a polymerizable group (R1 in the above-mentioned formula) in each molecule that is cured by radical polymerization or cationic polymerization. Examples of silsesquioxane that are cured by radical polymerization include silsesquioxane having the R such as an acryloyl group or a methacryloyl groups. Meanwhile, in a type that is cured by cationic polymerization, examples of the R include an oxetanyl group and an epoxy group. Specifically, examples thereof include silsesquioxane derivatives of the SQ Series (AC-SQ, MAC-SQ, and OX-SQ), which are available from TOAGOSEI CO., LTD. Since silsesquioxane is highly viscous liquid, it is suitable for silsesquioxane to be added to the above-mentioned coating solution for use. Content of silsesquioxane in the coating solution is preferably 1 to 10 parts by mass, more preferable 2 to 8 parts by mass.

A polymerization initiator can be added as needed. Examples of the polymerization initiator include a radical photopolymerization initiator, a cationic photopolymerization initiator, a thermal radical polymerization initiator, and a thermal cationic polymerization initiator. These polymerization initiators may contain one polymerization initiator, or may contain multiple polymerization initiators. Examples of the radical photopolymerization initiator include the following.

Examples include, optionally substituted 2,4,5-triarylimidazole dimers such as 2-(o-chlorophenyl)-4,5-diphenylimidazole dimer, 2-(o-chlorophenyl)-4,5-di(methoxyphenyl)imidazole dimer, 2-(o-fluorophenyl)-4,5-diphenylimidazole dimer, and 2-(o- or p-methoxyphenyl)-4,5-diphenylimidazole dimer; benzophenone derivatives such as benzophenone, N,N'-tetramethyl-4,4'-diaminobenzophenone (Michler's ketone), N,N'-tetraethyl-4,4'-diaminobenzophenone, 4-methoxy-4'-dimethylaminobenzophenone, 4-chlorobenzophenone, 4,4'-dimethoxybenzophenone, and 4,4'-diaminobenzophenone; α-amino aromatic ketone derivatives such as 2-benzyl-2-dimethylamino-1-(4-morpholinophenyl)-butanone-1,2-methyl-1-[4-(methylthio)phenyl]-2-morpholinopropan-1-one; quinones such as 2-ethylanthraquinone, phenanthrenequinone, 2-t-butylanthraquinone, octamethyl anthraquinone, 1,2-benzanthraquinone, 2,3-benzanthraquinone, 2-phenylanthraquinone, 2,3-diphenylanthraquinone, 1-chloroanthraquinone, 2-methylanthraquinone, 1,4-naphthoquinone, 9,10-phenantharaquinone, 2-methyl-1,4-naphthoquinone, and 2,3-dimethylanthraquinone; benzoin ether derivatives such as benzoin methyl ether, benzoin ethyl ether, and benzoin phenyl ether; benzoin derivatives such as benzoin, methyl benzoin, ethyl benzoin, and propyl benzoin; benzyl derivatives such as benzyl dimethyl ketal; acridine derivatives such as 9-phenyl acridine, and 1,7-bis(9,9'-acridinyl)heptane; N-phenylglycine derivatives such as N-phenylglycine; acetophenone derivatives such as acetophenone, 3-methyl acetophenone, acetophenone benzyl ketal, l-hydroxycyclohexyl phenyl ketone, and 2,2-dimethoxy-2-phenylacetophenone; thioxanthone derivatives such as thioxanthone, diethylthioxanthone, 2-isopropylthioxanthone, and 2-chlorothioxanthone; acyl phosphine oxide derivatives such as 2,4,6-trimethylbenzoyldiphenylphosphine oxide, bis(2,4,6-trimethylbenzoyl) phenylphosphine oxide, and bis-(2,6-dimethoxybenzoyl)-2,4,4-trimethylpentylphosphine oxide; oxime ester derivatives such as 1,2-octanedione, 1-[4-(phenylthio)-,2-(O-benzoyloxime)], ethanone, and 1-[9-ethyl-6-(2-methylbenzoyl)-9H-carbazole-3-yl]-,1-(O-acetyloxime); xanthone; fluorenone; benzaldehyde; fluorene; anthraquinone; triphenylamine; carbazole; 1-(4-isopropylphenyl)-2-hydroxy-2-methylpropan-1-one; and 2-hydroxy-2-methyl-1-phenylpropan-1-one, but are not limited to these. Examples of commercial items of the radical photopolymerization initiator include Irgacure 184, 369, 651, 500, 819, 907, 784, 2959, CGI-1700, -1750, -1850, and CG24-61; Darocur 1173, Lucirin TPO, LR8893, and LR8970 (available from BASF Japan Ltd., "Darocur" and "Lucirin" are registered trademarks), UVeryl P36 (available from UCB); and CPI-210S, which is available from San-Apro Ltd. (available from San-Apro Ltd.), but are not limited to these.

As the cation photopolymerization initiator, an onium salt, an aromatic onium salt, an aryl sulfonium salt, or an aryl iodonium salt is preferable. Specific examples of the anions include tetrafluoroborate ions, hexafluorophosphate ions, hexafluoroantimonate ions, perchlorate ions, trifluoromethanesulfonate ions, and fluorosulfonate ions. Examples of commercial items of the cationic photopolymerization initiator include CPI-210S, which is available from San-Apro Ltd. (available from San-Apro Ltd.), UVI-6950 (available from Union Carbide), and Adeka Optomer SP-150 (available from ADEKA CORPORATION). Content of the polymerization initiator in the coating solution is preferably 0.01 to 1.5% by mass, more preferably 0.03% by mass to 1.0% by mass based on a solid concentration of silsesquioxane,

It is suitable for the above-mentioned silsesquioxane and polymerization initiator to be dissolved in a solvent to prepare a coating solution. An organic solvent is preferable as the solvent. Examples of usable organic solvent include alcohols, carboxylic acids, aliphatic or alicyclic hydrocarbons, aromatic hydrocarbons, esters, ketones, ethers, or a mixed solvent of two or more thereof, but are not particularly limited to these. Preferable examples of the alcohol include methanol, ethanol, 2-propanol, butanol, 2-methoxyethanol, 2-ethoxyethanol, 1-methoxy-2-propanol, 1-ethoxy-2-propanol, 1-propoxy-2-propanol, 4-methyl-2-pentanol, 2-ethylbutanol, 3-methoxy-3-methylbutanol, ethylene glycol, diethylene glycol, and glycerin. Specifically, it is preferable to use, as the carboxylic acids, n-butyric acid, α-methylbutyric acid, i-valeric acid, 2-ethylbutyric acid, 2,2-dimethylbutyric acid, 3,3-dimethylbutyric acid, 2,3-dimethylbutyric acid, 3-methylpentanoic acid, 4-methylpentanoic acid, 2-ethylpentanoic acid, 3-ethylpentanoic acid, 2,2-dimethylpentanoic acid, 3,3-dimethylpentanoic acid, 2,3-dimethylpentanoic acid, 2-ethylhexanoic acid, and 3-ethylhexanoic acid. Specifically, preferable examples of the aliphatic or alicyclic hydrocarbons include n-hexane, n-octane, cyclohexane, cyclopentane, and cyclooctane. Preferable examples of the aromatic hydrocarbons include toluene, xylene, and ethylbenzene. Preferable examples of the esters include ethyl formate, ethyl acetate, n-butyl acetate, ethylene glycol monomethyl ether acetate, ethylene glycol monoethyl ether acetate, ethylene glycol monobutyl ether acetate, and γ-butyrolactone. Preferable examples of the ketones include acetone, methyl ethyl ketone, methyl isobutyl ketone, and cyclohexanone. Preferable examples of the ethers include dimethoxyethane, tetrahydrofuran, dioxane, and diisopropyl ether.

It is preferable that coating layer 40 is formed by applying a liquid. It is preferable to use alcohols among the various solvents described above for the preparation of the coating solution from a viewpoint of stability of the solution.

The liquid to be applied (coating solution) preferably contains silsesquioxane. The coating solution can be prepared by adding a predetermined amount of silsesquioxane to the organic solvent and further adding the polymerization initiator thereto as needed.

The liquid to be applied (coating solution) preferably contains a fluorine resin. If the fluorine resin is used for the coating layer 40 of the organic material, a fluoroolefin-based copolymer is preferably contained. The fluoroolefin-based copolymer preferably has functional groups that can be reacted with a curing agent described below to form crosslinking bonds. A type of the functional groups can be suitably selected depending on combination with the curing agent. Representative examples include a hydroxyl group, a carboxyl group, an epoxy group, and an amino group.

Specific examples of the fluoroolefin -based copolymer include a copolymer of chlorotrifluoroethylene, cyclohexyl vinyl ether, alkyl vinyl ether, and hydroxyalkyl vinyl ether; a copolymer of chlorotrifluoroethylene, alkyl vinyl ether, and allyl alcohol; and a copolymer of chlorotrifluoroethylene, aliphatic carboxylic acid vinyl ester, and hydroxyalkyl vinyl ether. These are marketed, for example, as the trade name "LUMIFLON"(R) (available from AGC Inc.).

The fluoroolefin-based copolymer may be used alone or in a combination of two or more.

Various curing agents can be used. Specific examples of the curing agent include amino curing agent such as urea resin and polyvalent isocyanate curing agents. The curing agents may be used alone or in a combination of two or more.

As long as a solvent is commonly used for paints, the solvent may be any solvent. Examples include esters such as toluene, xylene, ethyl acetate, and butyl acetate and ketones such as methyl ethyl ketone and methyl isobutyl ketone. These may be used alone or in a combination of two or more.

An atmosphere in which the coating is performed is preferably replaced with an inert gas atmosphere such as dry air or dry nitrogen before a formation of a layer from coating solution. The dry atmosphere preferably has a relative humidity of 30% or less. This enables imparting abrasion resistance to the light-absorbing heat-shielding film 10.

As the method for applying the solution for forming the coating layer 40, known application methods such as dipping, spin coating, spraying, printing, flow coating, and combinations thereof can be suitably adopted. Film thickness can be controlled by changing a pulling rate in dipping, a substrate rotational rate in spin coating, and a concentration of the application solution.

The obtained coating layer 40 may be cured by high-energy irradiation such as light irradiation or radioactive ray radiation or by heating. The coating layer may be cured in a combination of high-energy ray irradiation and heating.

In a case of high-energy ray irradiation, examples of the high-energy rays include electron rays, X-rays, and ultraviolet rays, but are not particularly limited to these. If ultraviolet rays are used as high-energy rays, the irradiation wavelength region is preferably 160 nm to 400 nm. Output power is preferably 0.1 to 2000 mW/cm$^2$. An inert atmosphere such as nitrogen is preferably used as the curing atmosphere from a viewpoint of preventing an oxidation of silsesquioxane. It is suitable for the coating liquid to be heat-cured at a temperature of 50 to 250°C, more preferably 80 to 200°C, for 1 to 20 minutes.

Silsesquioxane has a thickness of suitably 20 nm or more and 180 nm or less, preferably 30 nm or more and 150 nm or less.

It is preferable that the step of forming the coating layer 40 includes a step of further forming the coating layer 40 of the organic material after the step of forming the coating layer 40 of the inorganic material (for example, a silsesquioxane layer) described above. Examples of the material for the coating layer 40 of the organic material include a fluorine resin and an acrylic resin. It is preferable that the coating layer 40 of the organic material is formed on the coating layer 40 of an inorganic material (for example, a silsesquioxane layer) described above. This enables imparting weather resistance to the light-absorbing heat-shielding film 10. Since the description of organic materials such as a fluorine resin and an acrylic resin is same as mentioned above, the description is omitted.

Since the thus obtained light-absorbing heat-shielding member and light-absorbing heat-shielding film of the present embodiment also have the mechanical strength of the film surface, an excellent light-absorbing heat-shielding film and an excellent light-absorbing heat-shielding member achieving the balance between light-absorbing and heat-shielding characteristics and abrasion resistance can be provided.

[Examples]

Hereinafter, the present invention will be more specifically described using Examples.

However, the present invention is not limited to the following Examples.

The visible light-absorbing properties were evaluated by measuring reflectance spectrum in visible ray region. A lens reflectance measuring machine (USPM-RU III, available from Olympus Corporation) was used as the measuring apparatus.

The heat-shielding properties of Examples were evaluated by measuring reflectance spectrum in infrared ray region.

A Fourier transform infrared spectroscope (FT/IR-6600, available from JASCO Corporation) was used as the measuring apparatus.

An abrasion resistance test of Examples was performed as follows. A load of 100 g was applied to a slider fit with surface property tester HEIDON Type: 38 (available from Shinto Scientific Co., Ltd.) Silbon paper, followed by an abrasion of each sample at a speed of 50 reciprocations per a minute for one minute. Abrasion resistance was evaluated based on results of optical microscope observation and reflectance measurement. An optical microscope (BX51M, available from Olympus Corporation) is used for the optical microscope observation.

(Example 1)

(Manufacturing of light-absorbing heat-shielding member)

Aluminum sec-butoxide (hereinafter also referred to as "Al(O-sec-Bu)$_3$") and ethyl acetoacetate (hereinafter also referred to as "EtOAcAc") were dissolved in 2-propanol (hereinafter also referred to as "IPA"), and the mixture was stirred at room temperature for around three hours to prepare an aluminum oxide sol solution. A molar ratio between components in the aluminum oxide sol solution, Al(O-sec-Bu)$_3$: EtOAcAc: IPA, was 1:1:20. Then, 0.01 M aqueous solution of dilute hydrochloric acid was added so that a molar ratio of hydrochloric acid to Al(O-sec-Bu)$_3$ was 2:1. The mixture was refluxed for around six hours to prepare a sol-gel coating liquid. The sol-gel coating liquid was applied to a quartz glass substrate #240 (#240 was a number of an abrasive) with a ground surface as a base substrate by spin coating to form a coating film. The coating film was then heat-treated at 100°C for one hour to obtain a transparent aluminum oxide gel film. The transparent aluminum oxide gel film was subsequently immersed in warm water at 80°C for 30 minutes and then dried at 100°C for ten minutes to form an aluminum oxide layer having uneven micro shapes.

An aqueous palladium chloride solution was applied to the aluminum oxide layer having uneven micro shapes by spin coating and then dried at 100°C. The coated layer was then immersed in a nickel-phosphorus plating solution at 80°C (phosphorus content: around 1 to 2% by weight) for 20 minutes to form a nickel layer as a metal layer having an uneven microstructure portion and a base thereunder. A light-absorbing heat-shielding film was exfoliated from a quartz glass substrate and etched with a 3M aqueous sodium hydroxide solution at room temperature for 50 hours as an etching step to manufacture a light-absorbing heat-shielding film. The obtained light-absorbing heat-shielding film had a total thickness of around 10 μm.

(Surface treatment step A)

A thermal cationic polymerization initiator (Sanaid SI-100L, diluted with γ-butyrolactone) was added to a liquid in which a silsesquioxane (OX-SQ SI-20, available from TOAGOSEI CO., LTD.) was dissolved in propylene glycol monomethyl ether, PGME, to adjust concentration of silsesquioxane to 5% by mass. The liquid was applied to the light-absorbing heat-shielding film by spin coating to form an applied layer. The applied film was then heat-treated at 200°C for one hour to obtain a surface-treated light-absorbing heat-shielding film.

(Example 2)

A light-absorbing heat-shielding film was manufactured in a same way as in Example 1 except that concentration of the silsesquioxane was changed to 3% by mass.

(Example 3)

A light-absorbing heat-shielding film was manufactured in a same way as in Example 1 except that the concentration of the silsesquioxane was changed to 2% by mass.

(Example 4)

A light-absorbing heat-shielding film was manufactured in a same way as in Example 1 except that the base substrate was changed into ground glass of #1200.

(Example 5)

A light-absorbing heat-shielding film was manufactured in a same way as in Example 1 except that the base substrate was changed into ground glass of #600.

(Example 6)

A light-absorbing heat-shielding film was manufactured in a same way as in Example 1 except that the base substrate was changed into ground glass of #400.

(Example 7)

A light-absorbing heat-shielding film was manufactured in a same way as in Example 1 except that the base substrate was changed into ground glass of #120.

(Example 8)

A light-absorbing heat-shielding film was manufactured in a same way as in Example 1 except that the base substrate was changed into mirror-polished glass.

(Surface treatment step B)

A base resin in which fluorine resin LUMIFLON (available from AGC Inc., LF-200) as a fluoroolefin-based copolymer was dissolved in xylene as solvent was prepared. A curing agent in which yellowing-free polyisocyanate (Tosoh Corporation, CORONATE HX) was dissolved in xylene as a solvent was prepared. The base resin, the curing agent, and dibutyltin dilaurate as a catalyst were mixed in predetermined amounts to prepare 25% by mass coating solution. The solution was applied to the light-absorbing heat-shielding films by spin coating to form an applied layer. The applied film was then heat-treated at 200°C for one hour to obtain the surface-treated light-absorbing heat-shielding films.

(Example 9)

A light-absorbing heat-shielding film was manufactured in a same way as in Example 1 except that the surface treatment step A was changed into the surface treatment step B.

(Example 10)

A light-absorbing heat-shielding film was manufactured in a same way as in Example 9 except that the base substrate was changed into ground glass of #1200.

(Example 11)

A light-absorbing heat-shielding film was manufactured in a same way as in Example 9 except that the base substrate was changed into ground glass of #600.

(Example 12)

A light-absorbing heat-shielding film was manufactured in a same way as in Example 9 except that the base substrate was changed into ground glass of #400.

(Example 13)

A light-absorbing heat-shielding film was manufactured in a same way as in Example 9 except that the base substrate was changed into ground glass of #120.

(Example 14)

A light-absorbing heat-shielding film was manufactured in a same way as in Example 9 except that the base substrate was changed into mirror-polished glass.

(Comparative Example 1)

A light-absorbing heat-shielding film was manufactured using ground glass of #240 as the base substrate in a same way as in Example 1 except that the surface treatment step was not performed with a silsesquioxane or a fluorine resin.

(Comparative Example 2)

A light-absorbing heat-shielding film was manufactured using mirror-polished glass as the base substrate in a same way as in Example 8 except that the surface treatment step was not performed with a silsesquioxane or a fluorine resin.

(Evaluation)

Table 1 shows results of evaluation of visible light-absorbing properties, heat-shielding properties, and abrasion resistance of the light-absorbing heat-shielding films manufactured in Examples and Comparative Examples. The visible light-absorbing properties of the film having low reflectance and excellent light-absorbing properties in the visible light region were rated as A. The heat-shielding properties of the film having higher reflectance and more excellent heat-shielding properties in mid- and far-infrared regions as the wavelength increased were rated as A.

The abrasion resistance of the film having neither marked wear tracks observed through an optical microscope after an abrasion test and nor an obvious difference between the reflectances before and after the abrasion test in visible ray region and infrared region was rated as A. The abrasion resistance of the film having marked wear tracks observed through an optical microscope after an abrasion test or having an obvious difference between the reflectances before and after an abrasion test in visible ray region and infrared region was rated as B.

[Table 1]

|  | Visible light-absorbing properties | Heat-shielding properties | Abrasion resistance |
|---|---|---|---|
| Example 1 | A | A | A |
| Example 2 | A | A | A |
| Example 3 | A | A | A |
| Example 4 | A | A | A |
| Example 5 | A | A | A |
| Example 6 | A | A | A |
| Example 7 | A | A | A |
| Example 8 | A | A | A |
| Example 9 | A | A | A |
| Example 10 | A | A | A |
| Example 11 | A | A | A |
| Example 12 | A | A | A |
| Example 13 | A | A | A |
| Example 14 | A | A | A |
| Comparative Example 1 | A | A | B |
| Comparative Example 2 | A | A | B |

FIGS. 4 and 5 illustrate optical microphotographs of the light-absorbing heat-shielding film obtained in Example 1 before and after the abrasion test. FIG. 4 is the photograph before the abrasion test. FIG. 5 is the photograph after the abrasion test. FIGS. 4 and 5 show that, even after the abrasion test, marked abrasion tracks are not observed, and the surface is not observed to be deteriorated. An obvious difference between the reflectances before and after the abrasion test in visible ray region and infrared region was not observed. Meanwhile, the abrasion test was performed, so that, as illustrated in FIG. 6, marked abrasion tracks appearing white were observed in Comparative Example 1. The abrasion test was performed, so that, in Comparative Example 2, marked abrasion tracks were observed, and an obvious difference between the reflectances before and after the abrasion test in visible ray region and infrared region was observed.

[Industrial Applicability]

The present invention enables providing an excellent light-absorbing heat-shielding film and an excellent light-absorbing heat-shielding member achieving the balance between light-absorbing and heat-shielding characteristics and abrasion resistance. The use of an optical element which is manufactured of a metal material including a microstructure which is surface-coated with a coating protective layer enables achieving the balance between the light-absorbing and heat-shielding characteristics and the abrasion resistance.

The present invention is not limited to the above-mentioned embodiments, and can be diversely modified and varied without departing from the spirit and the scope of the present invention. Accordingly, the following claims are attached to make the scope of the present invention public.

The present application claims priority to Japanese Patent Application No. 2023-001380, filed on January 6, 2023, and Japanese Patent Application No. 2023-182636, filed on October 24, 2023. The contents thereof are incorporated herein in their entirety.

[Reference Signs List]

1 metal layer
2 uneven microstructure portion (uneven structure)
3 metal oxide layer
4 metal oxide layer
5 substrate
7 film containing aluminum
8 base material
9 mold
10 light-absorbing heat-shielding film
21 second uneven structure
22 first uneven structure
40 coating layer
90 uneven shape
100 light-absorbing heat-shielding member
220 recess

**Claims**

1. A light-absorbing heat-shielding film, comprising:

   a metal layer comprising a first uneven structure on a principal surface;
   a metal oxide layer that is disposed on the principal surface; and
   a coating layer that is disposed on the metal oxide layer and that is different in material from the metal oxide layer,
   wherein the first uneven structure has an arithmetic mean roughness, Ra, of 1 nm or more and 50 nm or less and a maximum height, Rz, of 100 nm or more and 800 nm or less.

2. The light-absorbing heat-shielding film according to claim 1,
   wherein the coating layer comprises Si and O.

3. The light-absorbing heat-shielding film according to claim 1 or 2,
   wherein the coating layer comprises a polymer of siloxane.

4. The light-absorbing heat-shielding film according to any one of claims 1 to 3,
   wherein the coating layer comprises a polymer of silsesquioxane.

5. The light-absorbing heat-shielding film according to any one of claims 1 to 4,

   wherein the coating layer comprises a polymer of silsesquioxane, and the silsesquioxane is represented by the following composition formula: $[R1(SiO_{1.5})_n]$
   wherein the R1 is a polymerizable group.

6. The light-absorbing heat-shielding film according to any one of claims 1 to 5,

   wherein the coating layer comprises a polymer of silsesquioxane, and the silsesquioxane is represented by the following composition formula: $[R1(SiO_{1.5})_n]$
   wherein the R1 is at least one polymerizable group selected from the group consisting of an acryloyl group, a methacryloyl group, an oxetanyl group, and an epoxy group.

7. The light-absorbing heat-shielding film according to any one of claims 1 to 6,
   wherein the coating layer comprises a fluorine resin or an acrylic resin.

8. The light-absorbing heat-shielding film according to any one of claims 1 to 7,
   wherein the coating layer comprises a fluoroolefin-based polymer.

9. The light-absorbing heat-shielding film according to any one of claims 1 to 8,
   wherein a metal component of the metal oxide layer is different from a metal component of the metal layer.

10. The light-absorbing heat-shielding film according to any one of claims 1 to 9,
    wherein the metal oxide layer comprises aluminum oxide.

11. The light-absorbing heat-shielding film according to any one of claims 1 to 10,
    wherein the metal layer comprises any one selected from the group consisting of nickel, chromium, and zinc.

12. The light-absorbing heat-shielding film according to any one of claims 1 to 11,
    wherein the metal layer comprises a second uneven structure, and the second uneven structure has an arithmetic mean roughness, Ra, of 0.1 $\mu$m or more and 5 $\mu$m or less and a maximum height, Rz, of 1 $\mu$m or more and 10 $\mu$m or less.

13. The light-absorbing heat-shielding film according to claim 12,
    wherein the first uneven structure is formed on a top surface of the second uneven structure.

14. The light-absorbing heat-shielding film according to any one of claims 1 to 13,
    wherein the metal oxide layer fills recesses of the first uneven structure, and covers protrusions of the first uneven structure.

15. A light-absorbing heat-shielding member, comprising the light-absorbing heat-shielding film according to any one of claims 1 to 14,
    wherein a substrate is disposed on a surface opposite to a surface having the first uneven structure.

16. An article, comprising a heating element and the light-absorbing heat-shielding film according to any one of claims 1 to 14,
    wherein the light-absorbing heat-shielding film shields heat from the heating element.

17. A method for manufacturing a light-absorbing heat-shielding film, comprising:

    providing a mold having an uneven shape;
    forming a metal layer having an uneven structure which the uneven shape is transferred on the mold;
    separating the metal layer from the mold; and
    forming a coating layer on the uneven structure of the metal layer after separating.

18. The method for manufacturing a light-absorbing heat-shielding film according to claim 17,
    wherein the mold comprises a base material and a metal oxide layer having the uneven shape on the base material.

19. The method for manufacturing a light-absorbing heat-shielding film according to claim 18,
    wherein at least a part of the metal oxide layer is attached to the metal layer which is separated from the mold.

20. The method for manufacturing a light-absorbing heat-shielding film according to claim 19,
    wherein the coating layer covers at least a part of the metal oxide layer which is attached to the metal layer.

21. The method for manufacturing a light-absorbing heat-shielding film according to any one of claims 17 to 20,
    wherein the coating layer is formed by applying a liquid.

22. The method for manufacturing a light-absorbing heat-shielding film according to claim 21,
    wherein the liquid comprises silsesquioxane.

23. The method for manufacturing a light-absorbing heat-shielding film according to claim 21,

wherein the liquid comprises a fluorine resin.

24. The method for manufacturing a light-absorbing heat-shielding film according to any one of claims 17 to 23, wherein the uneven shape is formed by immersing a film comprising aluminum in warm water.

25. The method for manufacturing a light-absorbing heat-shielding film according to any one of claims 17 to 24, wherein at least a part of the metal oxide layer attached to the metal layer is removed from the metal layer before forming the coating layer.

26. A method for manufacturing a light-absorbing heat-shielding member, comprising:

    providing a mold having an uneven shape;
    forming a metal layer having an uneven structure which the uneven shape is transferred on the mold;
    separating the metal layer from the mold;
    forming a coating layer on the uneven structure of the metal layer after separating; and
    bonding a substrate to a surface opposite to a surface of the metal layer to which the uneven shape is transferred.

FIG. 1A

## FIG. 1B

EP 4 644 956 A1

EP 4 644 956 A1

*FIG. 2B*

FIG. 3A

*FIG. 3B*

FIG. 3C

EP 4 644 956 A1

FIG. 3D

EP 4 644 956 A1

FIG. 3F

FIG. 3G

EP 4 644 956 A1

FIG. 3H

FIG. 3I

## FIG. 4

## FIG. 5

## FIG. 6

**EP 4 644 956 A1**

<table>
<tr><td colspan="2">**INTERNATIONAL SEARCH REPORT**</td><td colspan="2">International application No.<br>**PCT/JP2023/045876**</td></tr>
</table>

| A. | CLASSIFICATION OF SUBJECT MATTER |
|---|---|

*G02B 5/00*(2006.01)i; *B32B 3/30*(2006.01)i; *B32B 9/00*(2006.01)i; *B32B 9/04*(2006.01)i; *G02B 1/118*(2015.01)i; *G02B 1/14*(2015.01)i

FI: G02B5/00 B; B32B3/30; B32B9/00 A; B32B9/04; G02B1/118; G02B1/14

According to International Patent Classification (IPC) or to both national classification and IPC

| B. | FIELDS SEARCHED |
|---|---|

Minimum documentation searched (classification system followed by classification symbols)

G02B5/00; B32B3/30; B32B9/00; B32B9/04; G02B1/14; G02B1/118

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2022/019264 A1 (CANON KABUSHIKI KAISHA) 27 January 2022 (2022-01-27)<br>paragraphs [0001], [0014]-[0115], claims, fig. 1-7 | 1-26 |
| Y | JP 2015-1578 A (NITTO DENKO CORPORATION) 05 January 2015 (2015-01-05)<br>paragraphs [0001], [0012]-[0051], fig. 1-3 | 1-26 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 February 2024** | **12 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

38

<table>
<tr><td colspan="2" align="center">**INTERNATIONAL SEARCH REPORT**<br>**Information on patent family members**</td><td colspan="2">International application No.<br><br>**PCT/JP2023/045876**</td></tr>
<tr><td align="center">Patent document<br>cited in search report</td><td align="center">Publication date<br>(day/month/year)</td><td align="center">Patent family member(s)</td><td align="center">Publication date<br>(day/month/year)</td></tr>
<tr><td align="center">WO    2022/019264   A1</td><td align="center">27 January 2022</td><td>US    2023/0161083   A1<br>paragraphs [0002], [0031]-<br>[0130], claims, fig. 1-7<br>GB    2612240   A<br>CN    116134346   A</td><td></td></tr>
<tr><td align="center">JP    2015-1578   A</td><td align="center">05 January 2015</td><td>(Family: none)</td><td></td></tr>
</table>

Form PCT/ISA/210 (patent family annex) (July 2022)

**EP 4 644 956 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022019264 A
- JP 2023001380 A
- JP 2023182636 A